# EUROPEAN PATENT SPECIFICATION

(11) **EP 2 833 282 B1**
(45) Date of publication and mention of the grant of the patent: **18.10.2017**
(21) Application number: 14179327.3
(22) Date of filing: 31.07.2014
(51) Int. Cl.: G06F 17/30

(54) **Data aggregation in an in-memory DBMS**
Datensammlung in einem In-Speicher-DBMS
Agrégation de données dans une DBMS en mémoire

(30) Priority: 31.07.2013 CN 201310329075; 06.08.2013 US 201313960457
(43) Date of publication of application: 04.02.2015
(73) Proprietor: SAP SE, 69190 Walldorf (DE)
(72) Inventor: Heumann, Jens, 69190 Walldorf (DE); Yao, Wallace, 69190 Walldorf (DE); Gu, Richard, 69190 Walldorf (DE); Tao, Javy, 69190 Walldorf (DE)
(74) Representative: Richardt Patentanwälte PartG mbB

(56) References cited:
- US-A1- 2007 185 833
- US-B1- 6 754 666
- US-B1- 8 341 164
- LIMA DANIEL MARIO DE ET AL: "Graph-Based Relational Data Visualization", 2013 17TH INTERNATIONAL CONFERENCE ON INFORMATION VISUALISATION, IEEE, 16 July 2013 (2013-07-16), pages 210-219, XP032525926, ISSN: 1550-6037, DOI: 10.1109/IV.2013.28 [retrieved on 2013-11-26]
- GRAY J ET AL: "Data cube: a relational aggregation operator generalizing GROUP-BY, CROSS-TAB, and SUB-TOTALS", DATA ENGINEERING, 1996. PROCEEDINGS OF THE TWELFTH INTERNATIONAL CONFE RENCE ON NEW ORLEANS, LA, USA 26 FEB.-1 MARCH 1996, LOS ALAMITOS, CA, USA,IEEE COMPUT. SOC, US, 26 February 1996 (1996-02-26), pages 152-159, XP010158909, DOI: 10.1109/ICDE.1996.492099 ISBN: 978-0-8186-7240-8
- Franz Färber ET AL: "SAP HANA Database - Data Management for Modern Business Applications", SIGMOD Record (Vol. 40, No. 4), 4 December 2011 (2011-12-04), pages 45-51, XP055079943, DOI: 10.1145/2094114.2094126 Retrieved from the Internet: URL:http://delivery.acm.org/ [retrieved on 2013-09-18]
- David Taniar ET AL: "Parallel Processing of Multi-join Expansion_aggregate Data Cube Query in High Performance Database Systems", IEEE, 22 May 2002 (2002-05-22), XP055300154, Victoria, Australia Retrieved from the Internet: URL:http://ieeexplore.ieee.org/ielx5/7867/ 21662/01004260.pdf?tp=&arnumber=1004260&is number=21662 [retrieved on 2016-09-06]
- HO G T S ET AL: "An intelligent production workflow mining system for continual quality enhancement", THE INTERNATIONAL JOURNAL OF ADVANCED MANUFACTURING TECHNOLOGY, SPRINGER, BERLIN, DE, vol. 28, no. 7-8, 1 April 2006 (2006-04-01), pages 792-809, XP019324746, ISSN: 1433-3015, DOI: 10.1007/S00170-004-2416-9
- UMESHWAR DAYAL ET AL: "Of Cubes, DAGs and Hierarchical Correlations: A Novel Conceptual Model for Analyzing Social Media Data", 15 October 2012 (2012-10-15), CONCEPTUAL MODELING, SPRINGER BERLIN HEIDELBERG, BERLIN, HEIDELBERG, PAGE(S) 30 - 49, XP047020664, ISBN: 978-3-642-34001-7

## Description

### Field of the invention

The invention relates to a data aggregation method for generating a report and to systems implementing the same.

### Background and related art

Reporting is an important task in many technical as well as business-related fields. For example, a manufacturer may own several production lines for producing a particular kind of goods. The output of each production line may be several thousand items a day. Each production line may comprise a plurality of machines. The machines of the different production lines may have been bought from different manufacturers or may have a different version number and may sometimes be exchanged between the different production lines. Each machine may have a different output rate depending on its age, its manufacturer, its type or its version number or in dependence on other factors.

If the number of items which are monitored is high, e.g. in the realm of several million items, and if the assignment to produced goods to machines or to production lines varies due to a frequent rearrangement of machines or machine groups in the production lines, generating an aggregated report for the individual machines and/or for the individual production lines may become highly complex and computationally demanding.

Patent application US 2007/0185833 A1 describes a query generator for generating a query which retrieves a desired set of data from a relational database and performs one or more aggregation functions on the set of data. The query generator is adapted to receive user input indicating the desired set of data and the aggregation functions to be performed; identify each join sup graph for the desired set of data; for each join sup graph identified in the previous step, generate an in-line view which, on execution, performs all of the aggregation functions that refer only to data within that join sup graph; and generate an output theory comprising the in-line views generated in a previous step as arguments of a join.

Patent document US 008341164 B1 discloses a data structure for storing items of information having the time of life interval for each item of information. The items of information are organized in a data structure having nodes and edges connecting the nodes. The data structure is preferably a directed acyclic graph structure. The data structure includes parent nodes and child nodes. The time interval specified for any child nodes must always be contained within the time interval specified for that child node's parent node, such that the data structure includes no child nodes with a time of life interval that falls outside of the time of life interval of its parent node.

### Summary

It is an objective of the present invention to provide for an improved method, computer-readable storage medium and database server as specified in the independent claims. Embodiments of the invention are given in the dependent claims. Embodiments of the present invention can be freely combined with each other if they are not mutually exclusive.

In one aspect, the invention relates to a data aggregation method implemented by an in-memory database management system (DBMS). The DBMS comprises an in-memory database. The in-memory database comprises a transactional data cube. The transactional data cube comprises a plurality of data records. The method comprises:
- generating a hierarchical graph comprising a plurality of interconnected nodes and leafs, all leafs of the generated hierarchical graph belonging to a first hierarchical level, all nodes of the generated hierarchical graph belonging to two or more other hierarchical levels, each node and each leaf representing a physical entity or a combination of physical entities, wherein at least one of the leafs is a
   direct child of two or more of the nodes, wherein each of the data records of the transactional data cube comprises an ID of one of the leafs;
- receiving a request via a telecommunication network from a client device, the request comprising one or more select criteria and a node-ID of one of the nodes;
- in response to receiving the request, selecting a sub-graph from the graph, the root node of the sub-graph being identified by the node ID of the request;
- automatically, in response to the query, generating a factor table as a derivative of the selected sub-graph, the factor table being an in-memory database table to be used for in-memory DB-JOIN operations for hierarchical aggregation tasks, the factor table comprising one or more lines for each of the leafs of the sub-graph.

Each of the lines of the factor table comprises at least:
- a first ID, the first ID being an ID of one of the leafs of the sub-graph or of a first one of the nodes of the sub-graph; and
- a second ID, the second ID being an ID of a second one of the nodes of the sub-graph, wherein the node or leaf identified by the first ID is a direct or indirect child of said second node within the sub-graph; and
- a factor, the factor indicating to which degree said leaf or first node identified by the first ID is a direct or indirect child of said second node.

The method further comprises generating an aggregated report by:
- executing a database-JOIN operation, the JOIN operation joining the factor table and the transactional data cube at least via the first ID, the JOIN operation comprising aggregating the transactional data assigned to leafs and nodes of the sub-graph which match the select criteria, wherein only a factor-dependent fraction of the transactional data is aggregated in accordance with the topology of the sub-graph, wherein transcational data relates to data that specifies an amount of resources having been added to or having been removed from a physical object at a given moment in time; and
- returning the aggregated report comprising the aggregated data to the client device via the telecommunication network.
This may be advantageous as a tremendous gain in performance may be achieved when calculating an aggregated report for large amounts of data being organized hierarchically. In state of the art systems, data aggregation of complex, large and hierarchically organized data was performed in the application layer because database routines, which are usually speed-optimized and very efficient, could not cope with the complexity of the data to be aggregated. Performing a calculation in the application layer allowed the implementation of complex procedures for traversing the hierarchically organized data, but the calculation speed achieved by said application-layer based approaches was slow. The present invention may increase performance by separating the topological information from the transactional data and by selecting only a fraction (sub-graph) of said topological information. As the processing of the hierarchical graph comprising merely the topological information may be performed much more efficiently than processing a single data structure comprising both the transactional data and the topological information, the selection of the fraction of said topological information may be performed much faster and less data may have to be maintained in memory. The sub-graph whose root node is identified dynamically in dependence on the request may allow for a dynamic and request-dependent selection of the topological information that are of relevance for a particular client or a particular request, and the selective processing of said relevant subset. In a further beneficial aspect, the transformation of the sub-graph into a factor table may allow to bring the topological information in a form that allows the execution of standard SQL operations, such as JOIN operations, on the factor table. Thus, the proposed data aggregation approach may increase performance by separating topological information stored in a hierarchical graph from the transactional data stored in a data cube and by efficiently reducing the amount of data to be processed at first in respect to the topological information by selecting the sub-graph. By transforming the sub-graph into a factor table, the use of efficient, DBMS-internal SQL routines such as JOIN operations may be used for further reducing the amount of transactional data to be processed and for calculating the aggregated report. Thus, also complex hierarchical data comprising millions of items may be aggregated in real-time by pushing the calculation from the application layer to the database layer.

According to embodiments, the transactional data cube is implemented as an OLAP cube. The hierarchical graph may comprise, for example, the topology of the interconnected physical entities, e.g. machine parts, machines, production lines, or companies, company groups or the like. The data records may comprise, for example, data being indicative of the transfer, the receiving or the removing of scores, tokens, produced goods or fiscal figures from or to a physical entity or a group of physical entities represented by a leaf or a node. The select criteria may, for example, comprise a year, machine-type-ID, a production-line-ID, an account, a company-ID or company group-ID or the like.

According to embodiments, each data record comprises a timestamp information. The timestamp information indicates a moment of performing a transaction on one of the leafs or nodes. The generation of the hierarchical graph comprises assigning a validity period to each edge connecting two nodes or connecting a node and a leaf of the hierarchical graph. The factor table is generated such that each line of the generated factor table further comprises one of the validity periods for indicating a time during which the leaf or node being identified by the first ID was a direct or indirect child of the node identified by the second ID contained in said line.

This may be advantageous, because said features may allow filtering out transactional data records which have not been generated and stored during a particular time period considered as relevant for a report. As the validity period may be assigned to the edges individually, the method may allow the processing of highly complex, time-variant hierarchical data, whereby the physical entities represented by the leafs and edges may be de-assigned and re-assigned to different nodes frequently. Thus, the generation of aggregated reports may be enabled for hierarchically organized data whose topology is changed frequently and for which formerly an aggregated report could not be generated at all or at least not in real time.

According to embodiments, the data request comprises a specification of a reporting time period. The generation of the hierarchical graph comprises selectively including nodes and leafs into the hierarchical graph which are connected by one or more edges respectively having a validity period lying within the reporting time period. This may enable a client to flexibly and dynamically specify a time period for which a report shall be generated. Due to the complexity of the underlying data structure (e.g. millions of transactions related to thousands of physical entities being organized in a hierarchy whose topology changes frequently and wherein some particular physical entries represented by leafs may have partially belong to different other physical entities acting as 'owners'), it was formerly often not possible to let a client dynamically select the time frame of interest. As the processing load according to embodiments of the invention may be reduced dramatically by pushing calculations from the application layer into the database layer and by transforming available data into data structures that can be efficiently processed by database-internal commands, embodiments of the invention may allow for a real-time calculation of a report for an arbitrary time of interest and for an arbitrary node and its child-nodes within a complex and dynamically varying hierarchy.

According to embodiments, each data record of the transactional data cube belongs to one of two or more data categories. Data categories may differ in respect to the availability of transaction related information such as the ID of the transactional partner. Aggregating the transactional data comprises processing the transactional data records separately by different sub-scripts of an SQL script constituting an SQL view. When executing the JOIN operation contained in one of the sub-script, the DBMS selectively uses data records as data basis for the data aggregation which belong to the data category for which said sub-script is executed. This may be advantageous, because some transaction related data which may be necessary for generating the aggregated report which may not be readily available for some record of a particular data category may be calculated dynamically and may be used as input for SQL operations performed by sub-scripts used for processing data records of another data category. According to some embodiments, the fact table and/or the sub-graph may be cached and reused for a second request whose signature is identical to a previous request.

According to embodiments, different database views or different SQL subscripts may exist and may be used for calculating different types of aggregated reports. For example, there may exist a view for calculating an official report, or a confidential internal report, a report to a controller or a report to a sales representative. In different report types, data may be aggregated for different receivers. For example, some receivers may be interested in the total output of a production line while others may be interested in the aggregated amount of idle times, energy consumption or the like. One type of report may relate to the figures obtained from selling a first type of goods while another type of report may crelate to figures obtained from selling another kind of goods.

According to embodiments, generating the factor table comprises representing each parent-child relationship of any one of the leafs of the sub-graph and any one of its direct parent nodes of the sub-graph by a respective line of the factor table; and representing each parent-child relationship of any one of the leafs of the sub-graph and any one of its indirect parent nodes of the sub-graph by a respective line of the factor table.

According to some embodiments, a parent-child relationship of any one of the leafs of the sub-graph and any one of its indirect parent nodes of the sub-graph is represented by a respective line of the factor table only in case at least one of the edges defining said parent-child relationship has assigned a validity period that limits the validity period assigned to the edge connecting the leaf with its direct parent node.

An indirect child-parent relationship is any connection between a first element (node or leaf) of a graph and a second element (node or leaf) of the graph that comprises at least one intermediate node and wherein the second element has a higher position within the hierarchy of the graph than the first element.

According to embodiments, the request further comprises one or more grouping criteria. Aggregating the transactional data comprises grouping the selected transactional data in accordance with the grouping criteria. For example, the grouping may be executed based on grouping criteria "machine-ID", "machine-type", "company-ID", "company-group-ID", a specific time interval like "week", "month" or "year or the like. Using grouping criteria and grouping functions for data aggregation may be advantageous, because grouping operations can be calculated rapidly by a DBMS by using database-internal functions such as an SQL GROUP BY clause.

According to embodiments, the SQL JOIN operation is one of a plurality of SQL JOIN operations specified in an SQL script, the SQL script comprising multiple SQL sub-scripts with respective ones of the SQL JOIN operations. Each of the sub-scripts is specific for processing transactional data records belonging to one of a plurality of data categories. Aggregating the transactional data comprises:
- processing transactional data records of a first data category by a first one of the sub-scripts, thereby generating a first intermediate result; and
- processing transactional data records of a second data category by a second one of the sub-scripts, thereby generating a second intermediate result; each subscript may comprise one or more JOIN operations which selectively use data records which belong to a particular data category as input; and
- combining the first and second intermediate result for generating the aggregated report or for initiating the execution of one or more further sub-scripts which use the combined intermediate result as input for generating the aggregated result.

Using a single SQL script comprising multiple sub-scripts for generating reports for different categories may facilitate the administration and modification of the data aggregation functions as the functions are maintained within the same SQL script. In addition, using multiple sequentially executed sub-scripts for different data categories may allow calculating data values which are currently not present in the transactional data records stored in the data cube but which are required for generating the aggregated result.

According to embodiments, each transactional data record may comprise a third ID, whereby the third ID is indicative of a leaf on which the transaction corresponding to said transactional data record was executed. Said leaf thereby may act as a receiver of resource items transferred during a transaction from another leaf or from a resource provider not represented as a leaf. Alternatively, the leaf on which the transaction was performed may act as a provider of resource items that are transferred during said transaction to another leaf or to a consumer that is not represented as a leaf.

According to embodiments, at least some of the transactional data records have respectively assigned a third ID being indicative of one of the leafs of the sub-graph and have in addition assigned a fourth IDs being indicative of another one of the leafs of the sub-graph. The leafs identified by the third and the fourth ID act as transaction partners of said transaction record. The database-JOIN operation is executed such that any one of said transactional data records is used for aggregating its transactional data for a particular one of the nodes of the sub-graph only in case:
- the time indicated by the timestamp information of said data record lies within the validity period specified in one of the lines of the generated factor table, and
- in case said factor table line comprises a first-ID that is identical to the third ID of said other one of the leafs.

The time and ID-based JOIN operation may allow for a very quick identification of transactional data records from millions of other transactional data records which relate to a transaction having been performed within a particular time period on a particular node or leaf. There may exist some transactional data records which comprise only a single reference to a leaf or a node, e.g. in case some materials, resources, scores or money were assigned to said node or leaf or removed from said node or leaf but were not transferred to another one of the leafs or nodes "known" in the system". For example, a failed machine that cannot be repaired and that is irreversibly removed from the production line may result in a reduction of resources assigned to a particular production line. This reduction is not compensated by a corresponding increase of resources of another production line as would be the case if the machine would simply have been transferred from one production line to another one.

According to embodiments, said kind of database operation is executed selectively for data records belonging to a "first data category".

According to embodiments, the database-JOIN operation is executed such that a transactional data record having assigned a third ID that identifies of one of the leafs of the sub-graph and having in addition assigned a fourth ID of one of the leafs of the sub-graph acting as transaction partner is used for aggregating its transactional data for a particular one of the nodes of the sub-graph only in case:
∘ the time indicated by a timestamp information of said data record lies within the validity period specified in some of the lines of the generated factor table, and
∘ a first one of said factor table lines comprise a first-ID that is identical to the third ID of said other one of the leafs, and
∘ a second one of said factor table lines comprises a first ID that is identical to the fourth ID of said other one of the leafs; and
∘ an ID of said particular node is contained as parent-node-ID in the first and the second factor table lines. The parent-node-ID indicates that said particular node is direct or indirect parent of the two leafs identified by the third and fourth 10.
∘ .

The matching of the timestamp information with the validity times and the matching of the IDs by means of database JOIN operations may allow for a very quick identification of transactional data records from millions of other transactional data records which relate to a transaction having been performed within a particular time period on two nodes or leafs ("transaction partners") which belong to a common, shared parent node. For example, if a machine of a first production line is transferred to another production line, or if some money is transferred from one company to another company or company group, two entities may be involved in this kind of transaction. When calculating an aggregated score for a particular node, it may be necessary to quickly identify all transactions having been performed solely between direct or indirect children of said parent node for filtering out said particular kinds of transactions from the aggregated report to be generated.

Transforming the topological information into the factor table as described above may allow to quickly identify said kind of shared parent nodes and to link the transactional data to the time variant hierarchy. No time consuming data processing loops in the application layer may be necessary any more as the linking of (potentially millions of) transactional data records with the physical entity hierarchy is pushed to the database layer.

According to embodiments, this may be performed by means of a Join operation that joins the transactional data cube with the factor table twice. The two-fold Join may be implemented as a Cross-Join of the factor table with itself.

According to embodiments, said kind of Cross-Join is executed selectively for data records belonging to a "second data category".

According to embodiments, transactional data records of a first data category comprise a third ID that identifies a leaf on which the transaction of said transactional record was performed, whereby transactional records of the first data category lack a fourth ID or do not evaluate or use the fourth ID. A "fourth ID" identifies a leaf that represents a transaction partner of the physical entity represented by the leaf that is identified by the third ID. For example, in case the transaction partner of said transaction is absent, does not exist or is not be part of the sub-graph or the transactional data cube , a respective transactional data record belongs to the first data category.

Transactional data records of a second data category comprise a third ID. The third ID identifies a leaf on which the transaction of said transactional record was performed. In addition, transactional data records of the second data category comprise a fourth ID being indicative of a leaf representing a transaction partner of the leaf identified by the third ID. For example, some application programs may managing or executing a transaction may already "know" the IDs of both transaction partners when creating and storing respective data records.

In some embodiments, the cube in addition comprises data records of a third data category. Transactional data records of the third category comprise a third ID of a leaf on which the respective transaction was performed, but lack a fourth ID of a transactional partner leaf. However, transaction records of the third data category may already have assigned an ID of the direct parent node of the leaf identified by the third ID. Thus, the assignment of the leafs and its associated transactional data to one or more parent nodes is not calculated dynamically for the third data category, but is already provided by the transactional data records in the cube. Identifying and processing data records of said kind of data category separately may further increase performance. Data records of the third data category may be linked to the nodes of the sub-graphs by a simple JOIN operation of an ID of the direct parent node contained already in the transactional data record with a "second ID" column of the factor table to ensure that the transactional data record was performed on a leaf that is part of the sub-graph for which the report shall be generated.

According to embodiments, executing the data aggregation for a particular one of the nodes comprises filtering out transactions having been performed between two of the direct or indirect child leafs of said particular node by:
- performing the joining of the transactional data cube with the factor table for generating an intermediate result, the intermediate result merely comprising transactional data records of the second data category whose third-ID identifies a leaf that is a direct or indirect child leaf of said particular node; and
- joining the intermediate result table with the factor table a second time for identifying the transactional data records of the second data category of said intermediate result whose fourth ID is indicative of a direct or indirect child leaf of said particular node; and
- subtracting said identified transactional data from the transaction data having been aggregated from all direct and indirect children of said particular node when executing the data aggregation for said particular node.

In some embodiments, performing the joining further comprises evaluating a join criterion that the timestamp information of successfully joined transactional data records lies within the validity time period of matching lines of the factor table.

This may be advantageous, because the dynamic filtering out of in-group transactions (transactions performed between direct or indirect child-leafs of a particular node) may prevent the report from comprising aggregated figures which are too large and not correct, because transactions within the sub-graph for which the report is generated actually have leveled out each other. As the determination, if a leaf is a child of a particular node is executed fully dynamically, it is not necessary to specify "once and forever" if a particular transaction between partners should be considered for a given node in a report. This may provide for a great flexibility, because the child-parent relationship of the physical entities may vary over times: machines may be transferred from one production line to the other repeatedly. Companies may merge or split up or may be partially acquired by other companies. Thus, embodiments of the invention may allow the calculation of a report for a particular time period of interest by dynamically determining the topology of the relevant physical entities and by dynamically determining, if two transaction partners belong to (are children of) the same dynamically determined parent node.

For example, 100 resource items, e.g. 100 machines or 100$, may be transferred from leaf L1 to leaf L8. When calculating an aggregated report for a direct parent node N11 of leaf L1, said calculation will comprise a step of subtracting 100 resource items from node N11 provided that N11 owns a 100% share of L1 (which corresponds to a factor of 1). When calculating an aggregated report for a direct parent node N12 of leaf L8, said calculation will comprise a step of adding 100 resource items to node N12 provided that N12 owns a 100% share of L8. When calculating an aggregated report for a node N7 that is a direct or indirect parent node of both nodes N11 and N12, said calculation will comprise a step of subtracting 100 resource items from the aggregated score of N7 for its child node N12 and a step of adding 100 resource items from the aggregated score of N7 for its child node N11 to compensate the fact that both N11 and N12 are child nodes of N7 and thus a transfer of resource items between direct or indirect child leafs of node N7 do not have an effect on the total aggregated score value of said node. Thus, adding or subtracting some resource items from a particular leaf will have the same effect multiplied by a factor for each direct or indirect parent node of said leaf, whereby the factor indicates the degree said leaf is a child node of said parent node. But when the aggregation reaches a parent node that is parent to the source leaf of a transaction as well as of the target leaf of said transaction, the transactions executed solely between child leafs of said node N7 will level out when calculating the aggregated score value for said node N7. For example, the leveling out may be accomplished by transactional data records having assigned a label or flag to indicate that said data records belong to a second data category ("elimination records"). The first common parent node N7 of both leafs contained in a transaction of the second data category and all direct or indirect parent nodes of said node N7 may be determined dynamically and highly efficiently by means of a database operation, e.g. by one or more CROSS JOIN operations. This may enable to dynamically determine the node N7 and the corresponding hierarchical level at which the transactional data specified in the transactional data record of the second data category should be subtracted ("eliminated") from the aggregated result of said node N7.

According to embodiments, the first and the second joining of the factor table is performed on the same instance of the factor table by means of a CROSS-JOIN database operation. This may be advantageous, because CROSS-JOIN database operations are more efficient than some comparison functions implemented on the database layer and because memory and time may be saved by avoiding the loading of a second copy of the factor table into memory.

According to embodiments, the method further comprises:
- in response to receiving the request, generating an SQL script in form of an SQL view, the JOIN operation between the transactional data cube and the factor table being implemented as part of the SQL script;
- transforming the request or parts thereof into an SQL query;
- executing the SQL query on the SQL view, thereby triggering the execution of the SQL view and the generation of the aggregated report.

The JOIN operation may be one of multiple JOIN operations which are contained in said SQL script. Implementing the data aggregation functions and the one or more JOIN operations between the factor table and the transactional data cube in the form of an SQL view may be advantageous, because the SQL view may ease the generation of database queries being directed on said SQL views for retrieving the aggregated data values as the report.

According to embodiments, the data aggregation method further comprises:
- after the returning of the aggregated report, erasing the aggregated data generated as a result of the data aggregation from the memory and caching the generated SQL view in memory;
- receiving a further request;
- in case the signature of the further request is identical to the signature of the request, reusing the cached SQL view for processing the further request instead of generating a new SQL view for said further request.

A 'signature' of a request as used herein is the set of argument values contained in the request. For example, the argument values could comprise a particular node-ID, a time period for which the report shall be generated or the like.

The caching the SQL view (not the retrieved or processed transactional data records!) may increase performance without significantly increasing memory consumption: the caching of the transactional data records selected e.g. by the JOIN operation would consume a considerable amount of memory. By caching only the SQL view, the performance of the method can further be increased in a context where a client may repeatedly request the same kind of report without consuming significantly more memory.

According to embodiments, the data aggregation method further comprises:
- after the returning of the aggregated report, erasing the aggregated data generated as a result of the aggregation from the memory and caching the generated factor table in memory;
- receiving a further request;
- in case the of the further request is identical to the signature of the request, reusing the cached factor table for processing the further request instead of generating a new factor table for said further request.

For analogous reasons as already presented for the caching of the SQL view, the caching of the fact table (not the retrieved or processed transactional data records!) may increase performance without significantly increasing memory consumption.

According to embodiments, the hierarchical graph may be generated in response to the request or may be generated previously and used for multiple different requests. The hierarchical graph may be highly complex as it may comprise a plurality of edges respectively having a validity period and thus may comprise the topological information of the interconnectedness of the represented physical entities at many different moments in time. The hierarchical graph may be generated automatically by analyzing some database tables which comprise some customizing data or by evaluating some plain text files, e.g. XML files, or may be retrieved by the DBMS from an external source, e.g. another DBMS or an application program.

According to embodiments, the DBMS, upon storing any one of the data records to the in-memory database, automatically assigns a timestamp information and an ID of one of the leafs to said data record. This may be advantageous because any application that may request the storing of a transactional record for a particular physical entity (machine, company, etc) will at least "know" the current time and its own identity. It does not need to "know" by which "higher-level entity" said entity is currently owned. This may be advantageous in a context when the ownership relations between physical entities and thus the interconnectedness of the nodes representing said entities changes frequently. If the topology changes, the data records will not be affected.

According to embodiments, one or more first ones of the validity periods assigned to the edges of the hierarchical graph partially overlap, one or more second ones of the validity periods assigned to the edges of the hierarchical graph do not overlap and one or more third ones of the validity periods assigned to the edges of the hierarchical graph are completely contained within fourth ones of the validity periods of one or more of the edges. Thus, the chronological information stored in the hierarchical graph by means of the validity periods may be highly complex, but never the less the report may be generated for all said cases automaticaily and highly efficiently.

According to embodiments, the leafs of the hierarchical graph represent manufactured products and some of the nodes represent machines and some further nodes on a higher hierarchical level represent manufacturing lines. According to other embodiments, the leafs of the hierarchical graph represent a company, some of the nodes represent company groups and some further nodes of a higher hierarchical level represent company groups of a higher hierarchical level.

In a further aspect, the invention relates to a non-transitory, computer-readable medium storing computer-readable instructions executable by a computer, wherein execution of said instructions by the computer causes the computer to perform a method according to any one of the previous claims.

In a further aspect, the invention relates to a database server which is operatively coupled to one or more client devices via a telecommunication network. The database server hosts an in-memory DBMS comprising an in-memory database with a transactional data cube. The transactional data cube comprises a plurality of data records. The in-memory DBMS is configured for:
- generating a hierarchical graph comprising a plurality of interconnected nodes and leafs, all leafs of the generated hierarchical graph belonging to a first hierarchical level, all nodes of the generated hierarchical graph belonging to two or more other hierarchical levels, each node and each leaf representing a physical entity or a combination of physical entities, wherein at least one of the leafs is a direct child of two or more of the nodes, wherein each of the data records of the transactional data cube comprises an ID of the one of the leafs;
- receiving a request via the telecommunication network from one of the client devices, the request comprising one or more select criteria and a node-ID of one of the nodes;
- in response to receiving the request, selecting a sub-graph from the graph, the root node of the sub-graph being identified by the node ID of the request;
- automatically, in response to the query, generating a factor table as a derivative of the selected sub-graph, the factor table comprising one or more lines for each of the leafs of the sub-graph.

Each of the lines of the factor table comprises at least:
- a first ID, the first ID being an ID of one of the leafs of the sub-graph or of a first one of the nodes of the sub-graph; and
- a second ID, the second ID being an ID of a second one of the nodes of the sub-graph, wherein the node or leaf identified by the first ID is a direct or indirect child of said second node within the sub-graph; and
- a factor, the factor indicating to which degree said leaf or first node identified by the first ID is a direct or indirect child of said second node.

The method further comprises generating an aggregated report by:
- executing a database-JOIN operation, the JOIN operation joining the factor table and the transactional data cube at least via the first ID, the JOIN operation comprising aggregating the transactional data assigned to leafs and nodes of the sub-graph which match the select criteria, wherein only a factor-dependent fraction of the transactional data is aggregated in accordance with the topology of the sub-graph; and
- returning the aggregated report comprising the aggregated data to the client device.

An "in-memory database management system" (also main memory database system or main memory DBMS) is a database management system that primarily stores and processes its data in main memory. It is contrasted with database management systems that employ a disk storage mechanism. Main memory databases may be faster than disk-optimized databases since the internal optimization algorithms may be simpler and execute fewer CPU instructions. Accessing data in memory eliminates seek time when querying the data, which provides faster and more predictable performance than disk. An in-memory DBMS may store data on volatile memory devices. These devices lose all stored information when the device loses power or is reset. In this case, the in-memory DBMS can be said to lack support for the "durability" portion of the ACID (atomicity, consistency, isolation, durability) properties. Volatile memory-based IMDBs can, and often do, support the other three ACID properties of atomicity, consistency and isolation. However, many in-memory DBMS may allow persisting the stored data by means of snapshot files, checkpoint images, or other mechanisms which record the state of the database at a given moment in time on a non-volatile storage. The in-memory DBMS may generate these periodically or when it does a controlled shut-down. Examples for an in-memory DBMS are SAP's HANA or Microsoft's SQL CE.

An "in-memory database" is a database managed by an in-memory DBMS.

A "node" as used herein is a vertex of a graph, e.g. a hierarchical graph, that is connected to one or more other vertices via edges and that is not a leaf-node of the graph. A "leaf" is a vertex of a hierarchical graph that belongs to the lowest hierarchical level of said graph and that does not have and cannot have assigned a child element.

A "factor table" is an in-memory database table that comprises at least one or more factors and that may be used for efficient in-memory DB-JOIN operations for complex hierarchical aggregation tasks. A factor as used herein is a number that indicates to which degree a particular leaf belongs to two or more of its parent nodes. When aggregating the transactional data assigned to a particular leaf having assigned multiple parent nodes, the factor may specify, for each of said parent nodes, to which degree said transactional data should be considered when aggregating transactional data for one of the parent nodes. In some embodiments, a factor table may comprise additional columns.

A "validity period" as used herein is a time period during which, for a given combination of a first element and a second element, the first element is a direct or indirect child of the second element. The first element may be a leaf or a node and the second element may be a node. For example, if a company A is represented by a leaf LA and a company group G is represented by a node NG and company A is owned fully or partially by G during a time period vp, this may be represented by an edge connecting leaf LA and node NG and having assigned the time period vp as validity period of said edge. A "child" as used herein refers to a "child element", i.e., a child leaf or a child node.

A "JOIN operation" is an operation specified in an SQL join clause (also referred to as JOIN statement) that combines data records from two or more tables (i.e., a base table, a view, or a joined table) in a database. It creates a set that can be saved as a table or used as it is. A JOIN is a means for combining fields from two tables by using values common to each. ANSI-standard SQL specifies five types of JOIN: INNER, LEFT OUTER, RIGHT OUTER, FULL OUTER and CROSS. As a special case, a table can JOIN to itself in a self-join. A JOIN statement comprises one or more join criteria used to identify the records for joining. If the evaluated criteria are true, the combined record is then produced in the expected format, e.g. in the form of a record set or a temporary table.

"Transactional data" as used herein relates to data that specifies an amount of resources having been added to or having been removed from a physical object at a given moment in time. For example, a transactional data record could specify that a particular machine or a particular number of machines were removed from a production line at a given moment in time or could specify that a particular amount of money was credited to an account. Transactional data may also comprise data that specifies an amount of resources having been transferred from a physical object at a given moment in time to another physical object. For example, the transactional data could specify that a particular machine was moved from one production line to another production line or that an amount of money was transferred from an account of a first person to another account of another person.

A "transactional data cube" that may be implemented, for example, as OLAP (online analytical processing) cube, is a multi-dimensional array of data, whereby each dimension may reflect a respective attribute of the data. A data cube may be a data structure provided by the in-memory DBMS which allows executing some database operations such as slicing, dicing, drill-down or others for analyzing transactional data efficiently.

An "SQL view" is the result set of a stored SQL query on some data of a database which database users can query just as they would in a persistent database collection object (e.g. a table). This pre-established query command is kept in the database dictionary. Unlike ordinary base tables in a relational database, a view does not form part of the physical schema: as a result set, it is a virtual table computed or collated dynamically from data in the database when access to that view is requested. Changes applied to the data in a relevant underlying table are reflected in the data shown in subsequent invocations of the view.

A'graph' is a data structure wherein pairs of objects (referred to as leafs or nodes) are connected by links (referred to as 'edges').

A ,client device' may be any kind of data processing device, for example and without limitation, a desktop computer, a smartphone, a tabloid PC, a notebook or the like.

### Brief description of the drawings

In the following embodiments of the invention are explained in greater detail, by way of example only, making reference to the drawings in which:
- Figure 1: is a block diagram illustrating an in-memory DBMS coupled to a client device via a network;
- Figure 2: is a block diagram illustrating the composition of a request and several data structures maintained by the in-memory DBMS;
- Figure 3: is a flow chart of a method for generating an aggregated report; and
- Figures 4a-4c: illustrate example methods for calculating the aggregated report.

Like reference numbers and designations in the various drawings indicate like elements.

### Detailed description

Reports comprising aggregated hierarchical data are generated in a plurality of different technical as well as business-related fields. Generally, the reports shall provide some overview information on a particular element of a particular hierarchical level. For example, a report should return the number of goods produced by a particular production line consisting of multiple machines, or the number of goods produced by a particular plant comprising multiple production lines. Or a fiscal report is generated for a particular company group comprising a plurality of companies, wholly or partially, and/or comprising smaller company groups. Given that a particular machine may be moved from one production line to the other or that a company may be sold, acquired or merged, the calculation of a correct aggregated report is highly complex and tends to be computationally expensive.

Linking the transactional data, which may comprise millions of records, to the elements of a dynamically varying hierarchy of physical entities was a computationally highly demanding task in state of the art approaches. For example, large company groups may comprise about 500 independent companies and may comprise multiple sub-groups for some of said companies. For each of said companies as well as for the company group and its sub-group a report on the sold or bought goods may have to be calculated, whereby the transactions performed between said companies and with external companies may consist of several million transactional data records. As the hierarchy of the companies and company groups (or production lines and plants) for which a report shall be generated varies over time, some state of the art approaches performed a loop to determine, for each of the 500 companies, all transactions having been performed with any one of the 499 other companies, thereby taking into consideration current information what company is currently owned by a particular company group for determining if a particular transactional record adds to the aggregated total score of a node (company group) or not. Thus, for each of the 500 companies, 499 potential partners had to be evaluated and for each evaluated pair of potential partners all available transactional data records affecting one of said partners had to be determined (linked to the transaction partners) and processed. This approach was computationally highly demanding and often required several minutes or even hours.

Example implementations described in the following may provide a method and DBMS for calculating aggregated reports for complex and time-variant hierarchical systems in a very efficient manner by using and generating data structures that can be processed by database-internal, efficient SQL commands. Thus, according to embodiments, the inefficient repeated looping for identifying and evaluating transactional data records assigned to any possible combination of transaction partners may be avoided.

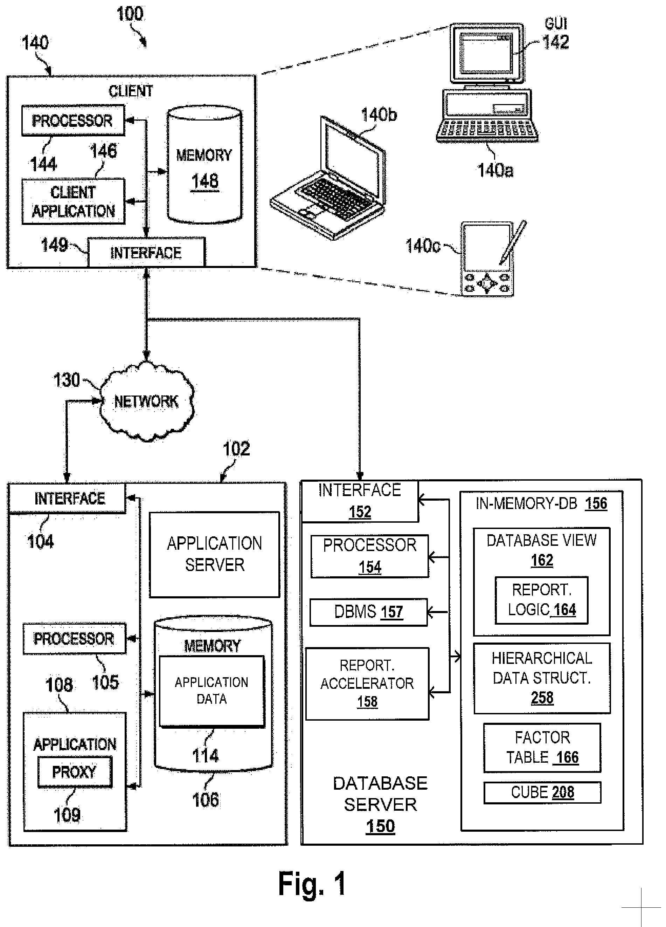

**FIG. 1** is a block diagram illustrating an example distributed computing system 100 comprising a server computer 102, one or more clients 140 and a database server 150. The database server is operable to communicate with the server 102 and the clients 140 across a telecommunication network 130. In some implementations, the distributed computer system 100 can be a cloud-computing environment.

The server 102 is an electronic computing device that is operable to receive, transmit, process, store, or manage data and information. The server may be, include, and/or be communicably coupled with an e-mail server, a web server, a caching server, a streaming data server, and/or other suitable server. In some implementations, the server 102 can be accessed directly or using the telecommunication network 130 to perform programmed tasks or operations of a particular application 108 and/or associated component (e.g., proxy 109). Requests/responses may also be sent to the server 102 from internal users, external or third-parties, other automated applications, as well as any other appropriate entities, individuals, systems, or computers (whether illustrated or not).

In some implementations, any and/or all components of the server 102, both hardware and/or software, may interface with each other and/or the interface using an application programming interface (API) and/or a service layer (neither illustrated). The API may include specifications for routines, data structures, and object classes. The API may be either computer-language independent or dependent and refer to a complete interface, a single function, or even a set of APIs. The service layer provides software services to the distributed computer system 100. The functionality of the server 102 may be accessible for all service consumers using this service layer. Software services, such as those provided by the service layer, provide reusable, defined business functionalities through a defined interface. For example, the interface may be software written in JAVA, C++, or other suitable language providing data in extensible markup language (XML) format or other suitable format. The API and/or service layer can be wholly or partial integral or stand alone in relation to the server 102 or components of the distributed system 100. Moreover, any or all parts of the API and/or the service layer may be implemented as child or sub-modules of another software module, enterprise application, or hardware module.

The server 102 includes an interface 104. Although illustrated as a single interface 104 in FIG. 1, two or more interfaces 104 may be used according to particular needs, desires, or particular implementations of the system 100. The interface 104 is used by the server 102 for communicating with other systems in a distributed environment - including within the system 100 - connected to the network 130; for example, the client 140, database server 150, other servers 102, and/or other systems (whether illustrated or not) that may be communicably coupled to the network 130. The server 102 includes a processor 105. Although illustrated as a single processor 105 in FIG. 1, two or more processors may be used according to particular needs, desires, or particular implementations of the distributed system 100. The processor 105 executes instructions and manipulates data to perform the operations of the server 102 and/or functionality required to provide enhanced reporting functionality to a client. For example, the server may receive a reporting request from a client, process the request and forward the request in unmodified or modified form to the database server. Alternatively, the client 140 may send the request for receiving an aggregated report directly to the database server.

The application 108 is any type of application that, at a high level, allows the client 140, database server 150, and/or other component(s) of the system 100 to request, view, add, edit, delete, manage, and/or consume content obtained from/by the server 102 and/or database server 150 in response to a received request/responses.

In some implementations, the application 108 can also be associated with application data 114, including objects and data, user profiles, processes, content provider locations, addresses, data storage locations/specifications, content lists, access requirements, and/or any other suitable data associated with application 108. The application data 114 can be represented by any type of suitable data structure(s) and in any suitable format(s). For example, the application data 114 could be an executable module, spreadsheet, database, flat file, binary file, multi-part file, linked list, and/or the like. The data 114 could be sent to the DBMS 157 for enabling the DBMS to create a hierarchical graph. Alternatively, the hierarchical graph may be generated from another module running on the database server or by the application 108 from the application data. The hierarchical graph may be communicated to the DBMS 157 via the network. The application data 114 could comprise the topological information necessary for generating the hierarchical graph.

The application 108 is also associated with a proxy 109. The proxy 109 can be any type of application that interfaces with the database server 150 (particularly the reporting accelerator 158 (described below)) to provide access to functionality not directly provided by the application 108. For example, the proxy 109 can provide the application 108 access to the reporting logic 164 (described below) associated with the in-memory database 156 using the reporting accelerator 158/API 160. In this example, the application 108 can generate a request that is transmitted by proxy 109 to the reporting accelerator 158 using API 160. The application 108 generates one or more database views 162 using the reporting accelerator 158/API 160 and reads data from the one or more database views 162. The database view may be an SQL script that comprises one or more JOIN operations operable to JOIN a transactional data cube with a factor table. The JOIN operations implemented in some embodiments will be described in greater detail later. In addition, the reporting accelerator 158 can query the reporting logic 164 as part of database view 162 to perform a requested calculation.

According to some embodiments, the reporting accelerator 158 may be configured for retrieving topological information from the application data 114 or from tables of the database 156 and use this information for generating the hierarchical graph 258.

Once application 108 is launched, it may interactively process a request received from the client. In some implementations, the application 108 can be and/or can include a web browser or can be a network-based application accessed and executed using the network 130 (e.g., through the Internet, or using at least one cloud-based service associated with the application 108). For example, a portion of a particular application 108 may be a web service associated with the application 108 that is remotely called, while another portion of the application 108 may be an interface object or agent bundled for processing at a remote client 140.

The client 140 (e.g., 140a-140c), also referred to as 'client device', may be any computing device operable to connect to or communicate with at least the server 102 and/or the database server 150 using the telecommunication network 130. The client 140 may be a desktop computer, a laptop/notebook computer, a wireless data port, a smart phone, a personal data assistant (PDA), a tablet computing device, one or more processors within these devices, a server, or any other suitable processing device. The client 140 can send requests to the server 102 and/or database server 150. The client 140 typically includes a client application 146, processor 144, a memory 148, and/or an interface 149. The client application 146 is any type of application that allows the client 140 to navigate to/from, request, view, edit, delete, and or manipulate content on the client 140, for example using a client application 146 that is WINDOWS-, LINUX-, HTML 5-, IOS-, and/or ANDROID-based. In some implementations, the client application 146 can be and/or include a web browser. In some implementations, the client application 146 can be a dedicated to one or more particular task(s), for example a BW application providing access to application functionality, such as requesting and retrieving an aggregated report directly from the database server 150 or indirectly via the server 102.

The interface 149 is used by the client 140 for communicating with other computing systems within the distributed computer system 100, using network 130. For example, the client 140 can use the interface 149 to communicate with the server 102, database server 150, other clients 140 and/or other systems (whether illustrated or not) that can be communicably coupled to the network 130. The processor 144 executes instructions and manipulates data to perform the operations of the client 140, including the functionality required to send requests to the server 102 and/or database server 150. Further, the illustrated client 140 includes a memory 148 and a GUI 142. The GUI 142 may be used for displaying the aggregated report to the user.

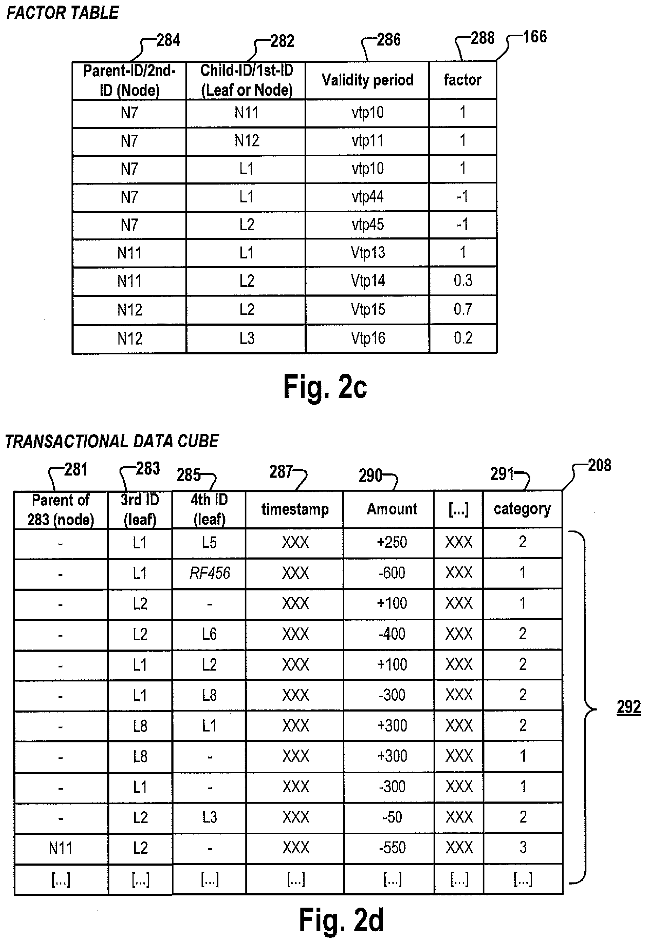

The database server 150 is an electronic computing device within the distributed computer system 100 that is operable to receive, transmit, process, store, or manage data and information using a relational database. According to some implementations, the database server 150 may be, include, and/or be communicably coupled with an e-mail server, a web server, a caching server, a streaming data server, and/or other suitable server. The database server 150 may operate in a cloud-based computing environment. In general, the database server 150 is a server that may store and/or execute one or more reporting accelerators 158 responsive to requests/responses sent by a server 102, client 140, other database server 150 and/or other component. The database server 150 provides support for enhanced functionality for generating aggregated reports. API 160 is illustrated as integral to the reporting accelerator 158, but in some implementations, the API 160 can be stand-alone in relation to the reporting accelerator 158 or even the database server 150. The database server 150 includes an interface 152 which is used by the database server 150 for receiving a request from a client or the server 102 and for returning the aggregated report via the network. The database server 150 also includes a relational in-memory database 156. The in-memory database 156 comprises transactional data that may be stored in a transactional data cube depicted in greater detail in Fig. 2d. The in-memory database 156 may be part of a high-performance relational database management system (RDBMS) that primarily relies on volatile electronic memory, such as random access memory (RAM), as opposed to magnetic, optical, removable, or other suitable non-electronic memory, for storage, retrieval, and processing of data. In some implementations, the in-memory database 156 can be replicated to one or more conventional databases (not illustrated) for backup purposes. The in-memory database 156 may include one or more database views 162, each with associated reporting logic 164, for joining a dynamically generated factor table 166 with the transactional data cube 208.

The database view 162 may be an in-memory database 156 script-based column view that is visible to reporting and other tools. When the database view 162 is accessed a function (e.g., the reporting logic 164 that may comprise one or more JOIN operations) is implicitly executed. In some implementations, the database view 162 is read-only from generation, while in others, the database view 162 can be dynamically modified post-generation. There may only be one database view in the DBMS for a given transactional data cube. The database view 162 stores reporting logic 164 and is generated dynamically by the DBMS in response to receiving a request. For example, only sub-routines specified in sub-scripts of the reporting logic 164 may be executed in dependence e.g. on the set of selection criteria contained in the request, in dependence on a configured reporting mode or the like. If the application 108 receives a request from a client 104, the application may modify the request, e.g. add some select criteria into the request, and pass the request on to the DBMS 157.

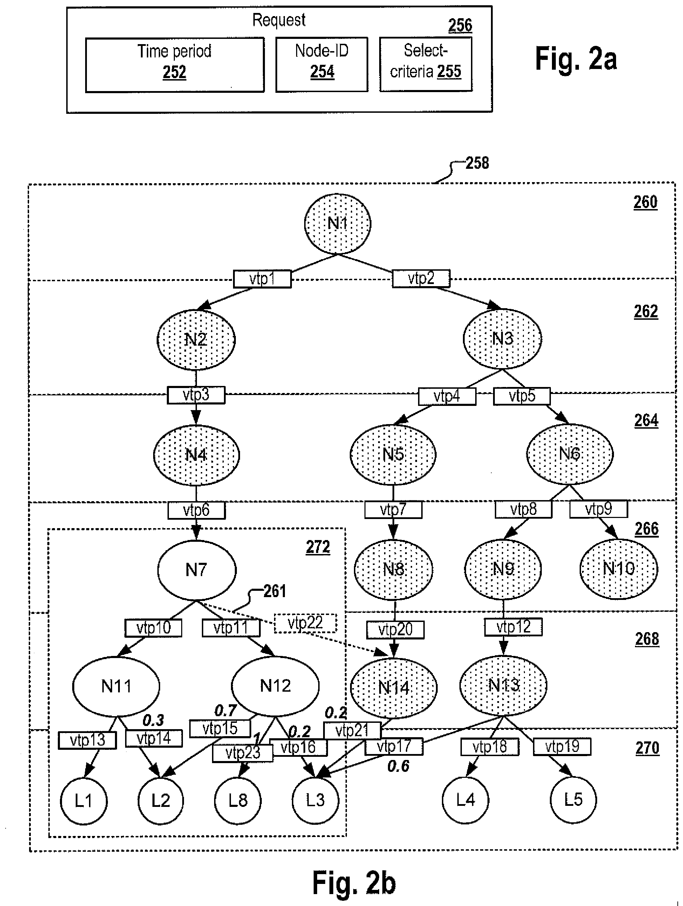

The DBMS may comprise a hierarchical graph 258 having been derived from time-variant topological information contained in the application data 114 or in the database 156. In addition, the DBMS dynamically generates a factor table 166 as a derivative of the hierarchical graph 258 in response to a request. The hierarchical graph will be explained in greater detail in the description section for Fig. 2b, the factor table in the description section of Fig. 2c.

For example, the factor table 166 could store that a factory owns three production lines, their name, location, average output of produced goods per day, energy consumption, error-induced down times and other data. In other examples, the factor table 166 could include currencies, inter-subsidiary transactions, agreements and other suitable data. The factor table 166 can be used by the reporting accelerator 158 and the database view 162 to interpret transactional data in order to generate the aggregated report. The machine ←→ production line relationships or company ←→ business group relationships may vary over time. For example, a machine can belong to different production lines in a calendar year or a company can belong to different business groups in a fiscal period. At the moment in time for which the report shall be generated, the machines or companies will have a particular, time-dependent hierarchical relationships. Said relationships are stored in and can be derived from the factor table 166. The reporting logic 164 will evaluate transactional data records against the data in the factor table 166 to determine the position of the transactional data within the hierarchical graph according to the moment in time when the report shall be generated. This calculation is pushed to the in-memory database 156 database view 162 to increase processing speed.

The reporting accelerator 158 is any application that serves as the calculation engine for reports as well as to determine/generate appropriate database views 162 for particular data as specified by a request (e.g., using one or more select criteria, etc.). The reporting accelerator 158 may perform three functions: 1) generation of database views 162, 2) generating the factor table 166 (as described above), and 3) calculation of the aggregated report by executing the database view 162 for joining the factor table 166 with the transactional data cube 208. Although shown as a separate entity within the database server 150, in some implementations, the described reporting accelerator 158/API 160 can be considered to be and/or combined with the reporting logic 164. Depending on the embodiment, the reporting accelerator 158 may be an integral part of the DBMS or a plug-in of the DBMS or may by an independent application operable to exchange data with the DBMS.

**Fig. 2a** shows a request 256 that may be submitted by a client 140 directly or via an application 108 of the server 102 to the in-memory DBMS 157. The request comprises at least an ID of one of the nodes of the hierarchical graph 258. Said ID can be used for identifying a root node of a sub-graph and thus for identifying said sub-graph for which the aggregated report is requested to be generated.

In addition, the request may comprise one or more select criteria 255 for selecting only some of the transactional data record whose attribute values match the select criteria.

In addition, the request may comprise a time period 252 specifying a time period for which the aggregated report shall be generated. In some examples, the request may further specify one or more data categories for which the report shall be generated. The selection of different data categories may result in the invocation of different sub-scripts of the SCL script constituting the database view 162 and constituting the reporting logic 164.

**Fig. 2b** shows a hierarchical graph 258 whose topology may be derived from some customizing data or application data 114 provided by the server 102 or by some tables of the database 156. It comprises several leafs L1-L5, L8 belonging to a first hierarchical level 270 of the graph 258 and several nodes N1-N13 belonging to one or more 260-268 higher levels of the graph. Each edge connecting two nodes or connecting a leaf and a node has assigned a validity period vtp1-vtp23 indicating a time span during which a connection (a parent-child relationship) between said nodes or nodes and leafs was valid. Each leaf may have exactly one or may have multiple direct parent nodes. In case a leaf has more than one parent, each edge connecting said leaf to its parent has assigned a factor being indicative of the degree to which said leaf belongs to said particular parent. According to embodiments, only leafs may have multiple parents while each node has exactly one parent node (or zero in case of the root node). For example, node N11 has a share of 0.3 of leaf L2 while node N12 has a share of 0.7 of leaf L2. Thus, the edge [N11-L2] has assigned the factor 0.3 while edge [N12-L2] has assigned 0.7. If a node or leaf has only a single direct parent node, it may have assigned a factor of '1' by default.

When a request is received by the DBMS, the DBMS identifies a node N7 within the hierarchical graph 258 whose ID matches the node-ID 254 contained in the request, and selects a sub-graph 272 whose root node N7 is the identified node. The selected sub-graph may comprise only those nodes and edges being connected to the root node of the sub-graph via an edge having assigned a validity period that lies within a time period 252 specified in the request. Thus, the graph 258 may comprise much more edges connecting the elements of the sub-graph than the actual sub-graph. For example, edge 261 may connect nodes N7 with N14 in the hierarchical graph. However, as the validity period vtp22 assigned to edge 261 lies not within the time period specified in the request, the edge 261 and all nodes which are solely children of N14 are not part of the sub-graph 272.

After having selected the sub-graph 272 in response to receiving the request, the DBMS may automatically generate a factor table as a derivative of the sub-graph. For example, the DBMS may traverse the graph 258 and create lines for all nodes and leafs which are direct or indirect child nodes of the identified node N7 and which are connected to each other by edges whose validity period lies within the requested time period. Thus, the generated factor table may reflect the topological structure of the interrelation of the physical entities represented by the nodes and leafs for which the report shall be generated.

**Fig. 2c** shows the dynamically generated factor table 166 in greater detail. It comprises a first column 282 for storing a first ID of a node or a leaf acting as a child element and a second column 284 for storing a second ID of a node acting as parent element of the child element. The first ID may be an ID of a leaf or of a node. The second ID is the ID of a node as a leaf can never act as a parent. In a further column 286, the validity periods of edges connecting the child element and the parent element contained in any line of the factor table are stored. In case a leaf has multiple parents, a factor in the factor column 288 indicates the share of each of said parents of said leaf. For example, the factor for the edge L2-N12 is 0.7. In case a leaf or node has only one parent, the factor may be absent or equal to 1. The factor table comprises a line for each connection of a leaf with one of its direct parent nodes in the sub-graph 272. In addition, the factor table may comprise a line for each connection of a leaf with one of its indirect parent nodes in the sub-graph 272. If one of the edges connecting the leaf with the indirect parent has assigned a validity period that deviates from the validity period of the edge connecting the leaf with the direct parent node, there may even be multiple lines per edge in the factor table. For example, leaf L1 is child of node N11 during validity time period vtp13 of 01.01.2011 till 31.12.2011. N11 may be a child of node N7 during a validity time period vtp10 of 01.02.2011 and 20.04.2011 and during a further validity time period vtp56 (not shown) between 01.10.2011 and 31.12.2011. Thus, there may actually be two lines in the factor table for the pair of L1 and N7:
One for vtp10 of 01.02.2011 till 20.04.2011 during which N11 was child of N7;
One for vtp56 of 01.10.2011 till 31.12.2011 during which N11 was again child of N7.

**Fig. 2d** shows some data contained in the transactional data cube 208 in a tabular form according to one example to ease understanding. Each transactional data record corresponds to a line of the table depicted in Fig. 2d.

For example, when a transactional data record relates to a particular leaf, e.g. a machine acting as resource in a production line, it is not necessary to store an assignment of the transactional record with the production line to which the machine currently belongs. This is because the transactions are only related to the machine itself. If the machine is transferred from one production line to another, the transactional data still only applies to the particular machine. A transactional data record may comprise some Transactional information, e.g. an amount 290 of money or a number of resources having been removed from or added to a physical entity represented by a leaf whose ID is stored as "third ID" in a column 283 of the data cube. The third ID is the ID of the leaf whose transactional data shall be aggregated. Each transactional data record 292 may comprise a timestamp information in column 287 being indicative of a moment in time when said data record was stored and/or the moment when a transaction on a physical object was executed, said physical object being represented by the leaf identified by the third ID.

At least some of the data records may have assigned a further ID, referred herein as "fourth ID". The fourth ID is an identifier of a leaf acting as transaction partner for the leaf identified by the third ID. Thus the transaction of a transactional data record 292 may involve transferring of resources, scores or money from a first partner identified by the third ID 283 to a second partner identified by the fourth ID 285 or vice versa. In addition, the transactional data cube may comprise a further column 281 acting as a container for storing an ID of a parent node of the leaf identified by the third ID. Said column may be empty and the identification of the parent node of the leaf whose ID is stored as third ID in column 283 may be executed dynamically by means of one or more database JOIN operations.

In some embodiments, the transactional data cube may comprise data records belonging to different data categories. A flag indicating the data category of a transactional data record may be stored in a further column 291 of the cube 208.

Transactional data records of the first data category merely comprise a leaf-ID of the leaf on which a transaction represented by said transactional data record was executed. Said leaf-ID is stored in column 283 as "third ID", The leaf-ID of a transaction partner leaf is not specified in a database column 285 acting as a container for a partner leaf ID also referred herein as "fourth ID". Alternatively, the transaction partner may be specified in column 285 but may not be evaluated. For example, the leaf ID RF456 in Fig. 2d may link to an external physical entity that shall neither be part of the hierarchical graph 258 nor part of any report. A "transaction partner" of a leaf is a leaf that receives resources from said leaf or that provides resources to said leaf.

Transactional data records of the second data category comprise a leaf-ID of the leaf on which a transaction represented by said transactional data record was executed in column 283 (said ID is referred herein as "third ID") and comprise the leaf-ID of a transaction partner leaf in column 285. The ID of the transaction partner leaf is referred to as "fourth ID". For the data records of the second data category, the column 281 acts as a placeholder for an ID of a parent node that is a direct or indirect parent for both partner leafs. The ID of said common parent node may be determined dynamically and highly efficiently by means of some database JOIN operations which operate specifically on database records of the third data category. Said JOIN operations may link the data records of the second data category to the node topology of the sub-graph via matching leaf-IDs of both partner leafs whose IDs are stored in columns 283 and 285. The transactional data records may comprise amounts that have to be subtracted from an aggregated score value when calculating an aggregated score for the dynamically determined common parent node 281 that is to be identified dynamically.

In some examples, there exist some transactional data records of a third data category that may already have stored an ID of the direct parent node of the leaf whose ID is stored in column 283 at the moment when the report generation is started. In this case, said transactional data records are aggregated by a different kind of JOIN statements which link the data records of the third data category to the node topology of the sub-graph via matching node-IDs of columns 281 and 284. To facilitate matters, in several sections of this documents, the reference number of a column of the data cube, factor table or view 162 will be used also to refer to a node-ID or leaf-ID that is stored in said column.

Transactional data records of the first and second data categories do not have assigned the parent node-ID of the leaf 283 on which a transaction was performed right from the beginning when the reporting method is started. Rather, transactional data records of the first and second data category are aggregated by means of JOIN statements which link the data records to the node topology of the sub-graph via one or more matching leaf-IDs. The data category of each transactional data record may be indicated in column 291 wherein a category identifier is stored.

For example, 300 resource items may be transferred in a transaction from leaf L1 to leaf L8. Thus, there is a record of category 1 specifying that leaf L1 has lost 300 items and there is another data record of category 1 specifying that leaf L8 has received 300 items. Thus, when calculating an aggregated score value for node N11, it will be dynamically determined that N11 is the only parent of L1 and thus, 300 items will also be subtracted from node N11. When calculating an aggregated score value for node N12, it will be dynamically determined that N12 is the only parent of L8 and thus, 300 items will also be added to node N12. When calculating an aggregated score value for node N7, it will be dynamically determined that N7 is an indirect parent of L8 and thus, 300 items will also be added to node N7. However, it will also be determined that N7 is an indirect parent of L18 and thus, 300 items will be subtracted from the aggregated score value of node N7.

In addition, there may be two data records of data category 2 for said transaction of 300 resource items from L1 to L8. For both data records it may be determined dynamically that N7 is a common parent of both leafs L1 and L8 and thus therefore the transactions between said leafs should be subtracted ("eliminated") from the score value aggregated for node N7. The subtraction may also be implemented by means of one or more database JOIN operations which operate selectively on data records of the second data category.

The transactional data cube may be joined with the factor table specifying particular factors related to aggregating data for a particular node. For example, for a transactional record <machine1, June, 100 items> and two lines in factor table: <machine1, production-line1, June> & <machine1, production-line2, July>, after a JOIN operation of the cube and the factor table, one record is created: <machine1, production-line1, June, 100 items> that is returned when executing the reporting logic of the view 162. When two tables are joined, the 'machine-ID' as the first ID 282 and the validity time may be used as joining criteria.

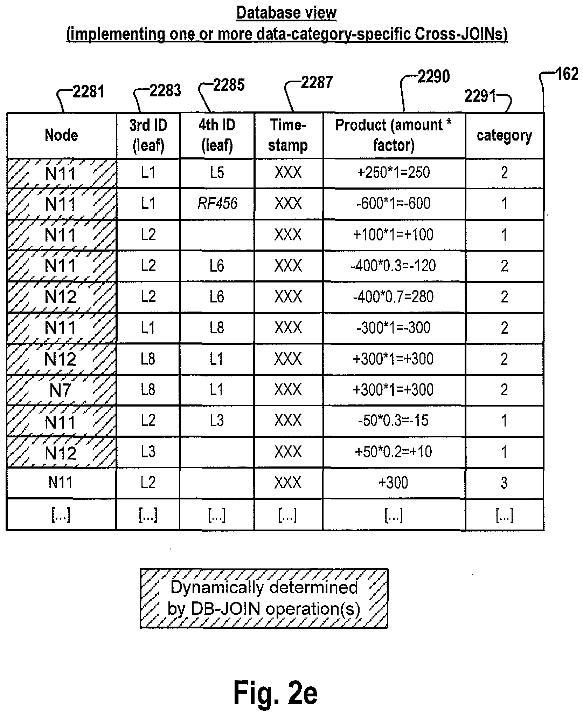

Fig. 2e shows a database view 162 comprising a SQL script that specifies one or more database operations for dynamically aggregating transactional data associated with any one of the leafs L1-L3, L8 or nodes N11, N12, N7 of the sub-graph 272 by joining the factor table 166 at least once with the transactional data cube 208. The view comprises several columns2281, 2283, 2285, 2287, 2290 for retrieving attribute values stored in corresponding columns 281, 283, 285, 287, 290 of the transactional data cube. The attribute values are to be retrieved from transactional data records matching the select criteria, the selected time period 252 and being assigned via the first ID 282 to a node or leaf which is part of the sub-graph. The column 2281 is filled with values at runtime when executing the database view 162. For example, column 2281 for category 2 data records specifies an ID of a parent node of two transaction partners whose IDs may be contained in columns 283 and 285 of the transactional data cube. This ID 2281 may be identified by means of joining the factor table with the transactional data cube twice by means of a cross join. column 2281 for category 1 data records specifies an ID of a direct parent node of a leaf on which a transaction was performed. In any case, the node-ID contained in column 2281 links transactional data obtained from the data cube to a node of the sub-graph of the time-variant graph.

In addition, the database view may comprise a column indicating the data category (1, 2 or 3) of a particular data record.

The database view 162 may be generated dynamically (e.g., by the reporting accelerator 158) and factors from the factor table 166 may be applied on the fly to return aggregated data values 2290 to be used in the aggregated report. Factors are numbers which determine a degree to which the transactional data of a leaf assigned to two or more parent nodes is used as input during data aggregation for aggregating the data said parent node.

### Example Table 1:

If, for example, a report is aggregated for N7 and the cross-join determines that L1 and L3 which are partner nodes of a transaction specified in a transactional data record of the second data category both belong to the parent node N7, resource items having been exchanged between L1 and L3 will be removed from an aggregated score value calculated for N7 because a transaction that merely affects children of a particular node N7 should not alter the total aggregated "score" of said node. Column 291 may comprise a flag that may indicate that the data record belongs to a particular data category (e.g. a second data category; records of the second data category may also referred to as "elimination records").

**Table 1: an example of a dynamically supplemented database view**

| **Common parent of both transaction partners** | **3rd ID (Partner 1)** | **4th ID (Partner 2)** | **Direction** | **Time-stamp** | **category** | **Amount** |
|---|---|---|---|---|---|---|
| | L1 | *L3 (not considered)* | In | | 1 | +100 |
| | L3 | L1 *(not considered)* | Out | | 1 | -100 |
| N7 | N12 | N11 | - | | 2 | -100 |
| (dynamically identified) | | | | | | |
| N7 (dynamically identified) | N11 | N12 | - | | 2 | +100 |

In another example of a dynamically supplemented database view, a company C11 represented by node N11 may be considered as an owner (parent) of company CL2 represented by leaf L2. C11 may hold a share on CL2 of 30%. A company C12 represented by node N12 may be considered as an owner (parent) of company CL3 represented by leaf L3. C12 may hold a share on CL2 of 70%.

### Example Table 2:

From the transactional data records in the example given in table 2 it can be derived that 800 items are transferred from leaf L1 to node L8 (line 1) and that leaf L1 in total is diminished by 1000 items (line 2). 200 items may have been transferred to other unknown items, e.g. to leafs L5 not contained in the sub-graph (see last line). Node N7 is dynamically identified as common parent node of both transaction partners L1, L8 and therefore the elimination record (line 2) is evaluated when calculating the aggregated score for N7. 800 resource items are subtracted from the total score of N7 because they were transferred merely internally. As N7 is dynamically identified as a parent node of L1, its aggregated score value is diminished by 1000 items. According to data record line 1 leaf L8 is increased by 800 items received from leaf L1 (line 3). When calculating an aggregated score for node N7, the internal transfer of 800 items from L1 to L8are subtracted from the aggregated result generated for node N7 because said internal transfer does not affect the total aggregated score of N7.

**Table 2: an example of a dynamically supplemented database view**

| **first common parent** | **3rd ID** | **4^{th} ID** | **timestamp** | **category** | **Amount** |
|---|---|---|---|---|---|
| | L8 | | XY | 1 | +800 |
| | L1 | | XY | 1 | -1000 |
| N7* | L8 | L1 | XY | 2 | -800 |
| *Dynamically determined | | | | | |
| | L1 | | XY | 1 | -200 |

Often the data of data category type 1 and 2 can be transferred from one node to another from time to time and node assignments need to be accounted for based on a particular requested reporting period. Proper parent node identification needs to be applied to dynamically assign data records of data category types 1 and 3 to the correct node in the hierarchical sub-graph for generating the report.

In some examples, the calculation of the aggregated report by the SQL view may comprise supplementing a column of the database view with a dynamically identified first common parent node of the two partner nodes specified in columns 283 and 285.

**Table 3:**

| **Partner 1 (3. ID)** | **Partner 2 (4. ID)** | **Parent node** | **Category** | **Amount** |
|---|---|---|---|---|
| L1 | | | 1 | 100 |
| L3 | | | 1 | -100 |
| L1 | L3 | | **2** | **-100** |
| L3 | L1 | | **2** | **100** |

As can be seen, no parent node data is present in table 3 which may represent a part of the structure of the database view or a temporary table generated during the data aggregation. The first common parent is identified by one or more joins on the factor table which comprises also topological data.

Given the illustrated example hierarchy above, the first common parent node information will be filled in as the node N7:

**Table 4**

| | | | |
|---|---|---|---|
| L1 | N7 | 1 | 100 |
| L3 | N7 | 1 | -100 |
| L1 | N7 | 2 | -100 |
| L3 | N7 | 2 | 100 |

### Processing data records of category 1

In the following, the Joining operations executed according to embodiments on transactional data record of data category 1 will be explained with the help of some simple examples:

**Table 6: factor table**

| **Parent-ID (2^{nd} ID)** | **Child-ID (1^{st} ID)** | **Factor** | **Validity period** |
|---|---|---|---|
| N101 | L10 | 1 | Jan 2011-Dec 2011 |
| N101 | L11 | 1 | Jan 2011-Dec 2011 |
| N102 | L12 | 1 | Jan 2011-Dec 2011 |

At first, factor table is joined with itself in a cross join and with the transactional data cube in a single database operation. Although the Joins are executed in one step and on a single instance of the factor table, the following table shall help to illustrate a "logical" intermediate result of said Cross-Join of the factor table depicted in table 6 with itself:

**Table 7: logical intermediate result of factor table cross-Join with itself**

| **Common parent node (column 2281)** | **Child-ID 3^{rd} ID** | **Child-ID 4^{th} ID** | **Factor** | **Validity period** |
|---|---|---|---|---|
| N101 | L10 | L11 | 1 | Jan 2011-Dec 2011 |

Said "logical" intermediate result of said Cross-Join of the factor table with itself as depicted in table 7 is also joined with the transactional data cube.

In a simplified example, the data cube 208 may comprise the following transactional data records:

**Table 8: transactional data records used as input for the join**

| **parent ID of leaf of column 283 (col-umn 281)** | **Child-ID 3^{rd} ID (column 283)** | **Child-ID 4^{th} ID (column 285)** | **timestamp** | **amount** | **category** |
|---|---|---|---|---|---|
| | L10 | | 22.Sept.2011 | 100 | 1 |
| | L10 | L11 | 22.Sept.2011 | 100 | 2 |
| N101 | L10 | | 22.Sept.2011 | 100 | 3 |

By executing the Join operation of the data records of table 8 with the cross-joined factor table depicted in table 7, the following result depicted in table 9 is generated. Said result may correspond to the structure of a database view implementing the JOIN operations.

**Table 8: database view comprising transactional data records supplemented with node information by the JOIN operation**

| **parent ID of leaf of column 283 (column 281)** | **Child-ID 3^{rd} ID (column 283)** | **Child-ID 4^{th} ID (column 285)** | **timestam p** | **amount** | **category** |
|---|---|---|---|---|---|
| **N101** | L10 | | 22.Sept. 2011 | 100 | 1 |
| *For category 1 data the content of column 2281 is taken from the factor table. N101 is determined* because *L10 belongs to N101 (there is an entry in the factor table* | | | | | |
| **N101** | L10 | L11 | 22.Sept. 2011 | 100 | 2 |
| *For category 2 data the content of the column2281 is taken from the factor table. N101 is determined because L10 and L11 belong to N101 (there is a respective entry in the factor table* | | | | | |
| N101 | L10 | | 22. Sept. 2011 | 100 | 3 |
| *for category 3 data records there is no factor table lookup for linking the record to the nodes of the sub-graph; However, the method comprises checking if the node-ID contained in column 281 of the cube belongs to the sub-graph. If it does not belong to the sub-graph, said data record is excluded from the database view resulting from the Join operation* | | | | | |

According to embodiments, performing the JOIN operation for transactional data records of the first data category comprises executing an SQL statement that selects column 281 (parent-ID of child), 283 (child-ID), amount*factor (aggregated value) from factor_table, data_cube where 283 (3^{rd} ID) =282 (1^{st} ID) and 287 (timestamp) lies within 286 (validity period). The expression 283 =282 is a short form of a condition that a value (ID of leaf on which a transaction was recorded) stored in column 283 of the transactional data cube is identical to a value (child-ID) stored in column 282 of the factor table. Thus, by a single database Join all data records of the first data category are quickly linked via their third IDs stored in column 283 to the topology of the hierarchical sub-graph. Executing loops in the application layer for assigning the records to topological information of a time variant hierarchy may thus be avoided. The aggregated data value may be calculated during said step by an SQL expression using an internal database function for calculating a product of the factor stored in the factor table and an amount stored in the data cube for said transactional data record.

According to embodiments, performing the JOIN operation for transactional data records of the second data category comprises executing an SQL statement that selects column 281 (parent-ID of both transaction partner leafs identified in 283 and 285), 283 ("third ID" of leaf on which a transaction is performed), 285' (transaction partner leaf) amount*factor (aggregated value) from factor_table, factor_table', data_cube where:
- 283 (3^{rd} ID) =282 (1^{st} ID contained in factor table used the first time in the cross-join with itself); and
- 285 (4^{th}) =282' (1^{st} ID contained in factor table' used the second time in the cross-join with itself); and
- 284 (parent node contained in factor table used the first time in the cross-join with itself) =284' (parent node contained in factor table' used the second time in the cross-join with itself); and
- 287 lies within 286 (validity period contained in factor table used the first time in the cross-join with itself); and
- 287 lies within 286' (validity period contained in factor table used the second time in the cross-join with itself).

Thus, by means of a database Join operation that performs a cross-JOIN of the factor table with itself and that also performs a JOIN operation on the transactional data cube it is possible to link all data records of the second data category quickly to the nodes acting as parent nodes of both transaction partners. This may allow a very rapid identification of common parent nodes at an arbitrary level within the hierarchy of the sub-graph. This may be advantageous, because the records of the second data category may be elimination records, i.e., may be records that comprise an amount that shall be subtracted from an aggregated result to be generated for a particular node, because the amount to be subtracted should level out transactions that have been executed only between children of said node.

Executing loops in the application layer for assigning elimination records to topological information of a time variant hierarchy may thus be avoided.

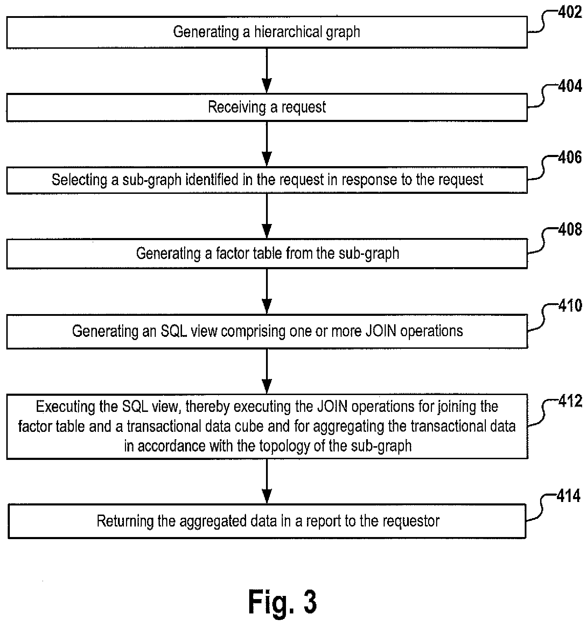

**Fig. 3** shows a flowchart of an embodiment of the method of efficiently creating an aggregated report. In a first step 402, a hierarchical graph 258 is generated by the DBMS or outside the DBMS. The DBMS receives in step 402 a request comprising a node-ID and selects in step 406 a sub-graph whose root node is identified by the node-ID from the hierarchical graph. The root node N7 of the sub-graph may comprise significantly fewer edges and child nodes than the corresponding node of the original hierarchical data structure. This is because edges may be included in the sub-graph only if they have assigned a validity period that lies within a time period specified in the request. In step 408 the DBMS generates a factor table from the sub-graph. In step 410, which may also be executed before and independently of receiving the request, the DBMS or the report accelerator 158 generates an SQL view. The DBMS executes the view 610 is in step 412. Thereby, the transactional data records assigned to nodes and leafs of the sub-graph are aggregated if their timestamp matches the validity periods specified in the individual lines of the factor table and if the third and/or fourth IDs stored as part of a transactional record matches the first ID of the factor table in a JOIN operation. The JOIN operation may be performed differently for different data categories. The one or more join operations link the transactional data records to nodes within different hierarchical levels of the sub-graph. The dynamically determined nodes may be stored in column 2281 of the view. The data aggregation may be performed easily and efficiently simply by evaluating and aggregating the data contained in the database view 162 that is dynamically supplemented with node IDs for linking transactional data to nodes of the hierarchy. Further database operations may be performed for generating the aggregated report. Said database operations may be part of the view 162 or may be stored elsewhere and use the data provided by the view 162 as input. The aggregated data may easily be retrieved by an SQL query directed at the tabular structure of the database view 162. In step 414, the DBMS returns the generated aggregated report to the requesting client 140 directly or via server 102 depicted in figure 1.

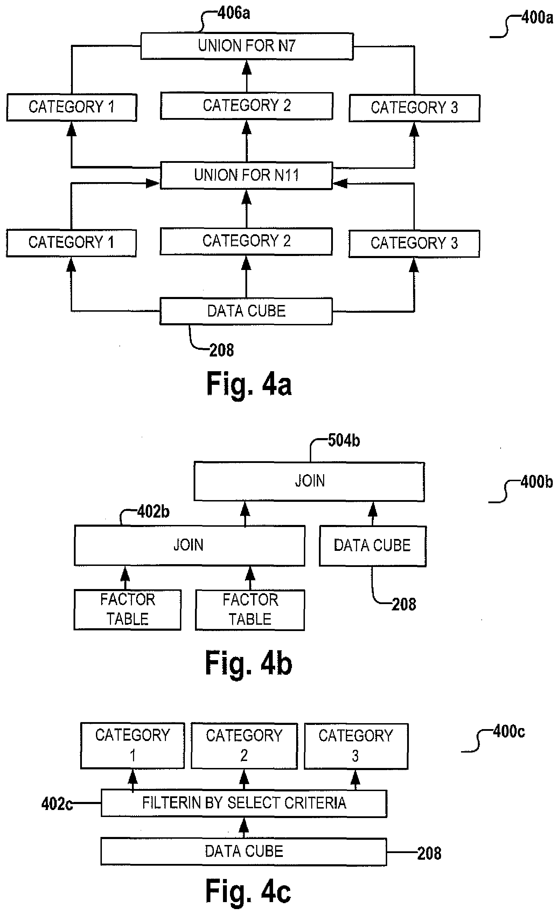

**Fig. 4a****-****Fig.4c** illustrate methods 400a-400c for calculating an aggregated report that can be run in parallel, in combination, in loops, or in any order.

**FIG. 4a** illustrates generating a report wherein different database operations are performed on different data categories 1-3. Intermediate results may be calculated separately for each of the data categories, whereby different transactional data records may be processed in dependence on their respectively assigned data category-ID. For example, for FIG. 4a, executing each of the three branches corresponding to a respective data category may involve executing a respective sub-script of an SQL script that constitutes the database view 162. For each of the three branches, the factor table is joined with the transactional data cube 208 and then intermediate results generated in each of the three branches are combined by means of an SQL UNION statement. Thus, a unified intermediate result may be generated that comprises data having been aggregated up to the node N11. The joining may be executed on the same instance of the factor table. Then, a further data category specific branch and corresponding SQL sub-script may be executed for calculating data category-specific results for the node N7 which may again be unified by a further SQL UNION statement. The unified result may be returned as the aggregated report to the requesting client. It is important to note that multiple sub-scripts of the database view may be executed in a stepwise, iterative manner and thus the database view 162 may be filled with calculated data in a stepwise manner. For example, when executing the branches for the first and second data category, the column 2281 of the view may be filled with the dynamically identified node-IDs.

**FIG. 4b** illustrates performing a cross join 402b operation of the factor table with itself. For each partner 283, 285 in a "two-partner"-transaction, the joining of the factor table is executed. Thereby, the same instance of the factor table may be used. This may help saving memory. The result 404b contains all the transactional data records in which both partners of a transaction are children of the same parent node for which data shall be aggregated. This may allow to dynamically identify all "two-partner" transactions being internal to the same parent node when generating the aggregated report.

At first, for the branch of the second data category, the transactional data cube may be joined with the factor table by means of a joining condition that the first ID 282 of the factor table is identical to a third 283 ID of the transactional data record. In a second step, the result of the first step is joined with the factor table a second time, thereby using a match of the second ID 284 of the factor table and a fourth ID (partner ID) of the transactional data cube as join condition as described in an example in the description section of Fig. 2e. Thirdly, when aggregating the data for a particular node N11, all transactions having been identified as node-internal transactions, e.g., transactions executed between children of said node N11, are identified and subtracted ("eliminated") from the total aggregated score calculated for said node. For example, columns 2291 and 2291 of the view of Fig. 2e could be used to identify nodes that are parent nodes of both partner leafs involved in a transaction.

**FIG. 4c** illustrates a reduction of data volume by means of select criteria according to some example implementations. Here, not all fields of the transactional data records are needed in the final aggregated report. Thus, a filtering 402c is performed on the transactional data cube by appropriate select criteria being directed at selected attributes and corresponding columns comprising attribute values needed for reporting. For example, a received request can be parsed to determine appropriate select criteria ("fields") that shall be selected and aggregated for reporting purposes. These select criteria can be used to minimize the volume of data that needs to be "handled" by various components of the DBMS. The reduction in data volume may help to increase processing/reporting efficiency, speed, etc.

The request may comprise different fields in the requests of different clients and client systems. The transactional data cube may comprise any possible fields at which a select criterion may possibly be directed, but the database view may only comprise a sub-set of said fields. Thus, different database views may be specified for different kinds of clients using different select criteria as part of the request.

Embodiments of the invention may allow the generation of an aggregated result for an arbitrary one of the nodes for an arbitrary time span in real-or substantially-near real-time also for millions of transactional data records. For example, when the transfer of a machine having a particular output of goods from one production line to another is automatically recorded for said particular machine, the recording system does not care and does not have to care about the number of output goods of the sending or the receiving production line as long as the (topological) information to which production line a machine belongs at a given moment in time is stored somewhere else and are accessible when the hierarchical graph is generated. This is because the transactional data, e.g. the number of output goods, are only related to the particular machine itself. If a machine is transferred from one production line to another, the data still only applies to the particular machine. Only at the time of reporting, the correct parent node(s) will be determined for every transactional record, according to the currently selected hierarchical sub-graph at that time. The information on inner-group transactional partners will be updated by the reporting logic 164 for each requested report dynamically and are written physically into the in-memory database. Result data from the database view 162 can be accessed by the client or the server 102 via the API 160. The high-performance nature of the in-memory database 156 also makes the use of a separate storage/reporting cube unnecessary as well as pre-calculated results/data. Thus, keeping data redundantly in memory of the database server and/or the server 102 may be avoided.

For example, if a request for calculating an aggregated report is received for a production line comprising machines hundred machines, the select criteria can be used to "filter" the available in-memory database 156 for selectively processing data records associated to machines matching said filter criteria. In one instance, the select criteria and the reporting time period (among other things) can be parsed from a request and inserted into the factor table 166 in order to limit/filter the data available in the transactional data cube 208. In some instances, additional columns in the factor table can be generated and filled based on any suitable data.

## Claims

1. A data aggregation method implemented by an in-memory database management system (157) comprising an in-memory database (156) with a transactional data cube (208), the transactional data cube comprising a plurality of data records (292), the method comprising:
- generating (402) a hierarchical graph (258) comprising a plurality of interconnected nodes (N1-N14) and leafs (L1-L5), all leafs of the generated hierarchical graph belonging to a first hierarchical level (270), all nodes of the generated hierarchical graph belonging to two or more other hierarchical levels (260-268), each node and each leaf representing a physical entity or a combination of physical entities, the physical entities being interconnected, the hierarchical graph having the topology of the interconnected physical entities, wherein at least one of the leafs is a direct child of two or more of the nodes, wherein each of the data records of the transactional data cube comprises an ID of one of the leafs;
- receiving (404) a request (256) via a telecommunication network from a client device (140), the request comprising one or more select criteria (255) and a node-ID (254) of one of the nodes;
- in response to receiving the request, selecting (406) a sub-graph (272) from the graph, the root node (N7) of the sub-graph being identified by the node ID (254) of the request;
- automatically, in response to the query, generating (408) a factor table (166) as a derivative of the selected sub-graph, the factor table being an in-memory database table to be used for in-memory DB-JOIN operations for hierarchical aggregation tasks, the factor table comprising one or more lines for each of the leafs of the sub-graph, wherein each of the lines of the factor table comprises at least:
∘ a first ID (282), the first ID being an ID of one of the leafs of the sub-graph or of a first one of the nodes of the sub-graph; and
∘ a second ID (284), the second ID being an ID of a second one of the nodes of the sub-graph, wherein the node or leaf identified by the first ID is a direct or indirect child of said second node within the sub-graph; and
∘ a factor (288), the factor indicating to which degree said leaf or first node identified by the first ID is a direct or indirect child of said second node;
- generating an aggregated report by:
∘ executing (412) a database-JOIN operation, the JOIN operation joining the factor table and the transactional data cube at least via the first ID, the JOIN operation comprising aggregating the transactional data assigned to leafs and nodes of the sub-graph which match the select criteria, wherein only a factor-dependent fraction of the transactional data is aggregated in accordance with the topology of the sub-graph, wherein transactional data relates to data that specifies an amount of resources having been added to or having been removed from a physical object at a given moment in time; and
- returning (414) the aggregated report comprising the aggregated data to the client device via the telecommunication network.

2. The data aggregation method of claim 1,
- wherein each data record (292) comprises a timestamp (287) information, the timestamp information indicating a moment of performing a transaction on one of the leafs or nodes;
- wherein generating the hierarchical graph comprises assigning a validity period (vtp1-vtp21) to each edge connecting two nodes or connecting a node and a leaf of the hierarchical graph;
- whereby the factor table is generated such that each line of the generated factor table further comprises (286) one of the validity periods for indicating a time during which the leaf or node being identified by the first ID was a direct or indirect child of the node identified by the second ID contained in said line.

3. The data aggregation method of claim 2,
- wherein the database-JOIN operation is executed such that a transactional data record having assigned a third ID (283) of one of the leafs of the sub-graph is used for aggregating its transactional data for a particular one of the nodes of the sub-graph only in case:
∘ the time indicated by the timestamp information (287) of said data record lies within the validity period (286) specified in one of the lines of the generated factor table, and
∘ wherein said factor table line comprises a first-ID (282) that is identical to the third ID (283) of said other one of the leafs.

4. The data aggregation method of claim 2,
- wherein at least some of the transactional data records have respectively assigned a third ID (283) being indicative of one of the leafs of the sub-graph and have in addition assigned a fourth IDs (285) being indicative of another one of the leafs of the sub-graph, the leafs identified by the third and the fourth ID acting as transaction partners of said transaction record,
- wherein the database-JOIN operation is executed such that any one of said transactional data records is used for aggregating its transactional data for a particular one of the nodes of the sub-graph only in case:
∘ the time indicated by a timestamp information (287) of said data record lies within the validity period (286) specified in some of the lines of the generated factor table, and
∘ a first one of said factor table lines comprise a first-ID (282) that is identical to the third ID (283) of said other one of the leafs, and
∘ a second one of said factor table lines comprises a first ID (282') that is identical to the fourth ID (285) of said other one of the leafs; and
∘ an ID of said particular node is contained as parent-node-ID (281, 281') in the first and the second factor table lines, the parent-node-ID indicating that said particular node is parent of the two leafs identified by the third and fourth ID.

5. The data aggregation method of any one of the previous claims 2-4,
- wherein the request (256) comprises a specification of a reporting time period (252); and
- wherein the generation of the hierarchical graph comprises selectively including nodes and leafs into the hierarchical graph which are connected by an edge having a validity period lying within the reporting time period.

6. The data aggregation method of any one of the previous claims, wherein generating the factor table (166) comprises:
- representing each parent-child relationship of any one of the leafs of the sub-graph and any one of its direct parent nodes of the sub-graph by a respective line of the factor table; and
- representing each parent-child relationship of any one of the leafs of the sub-graph and any one of its indirect parent nodes of the sub-graph by a respective line of the factor table.

7. The data aggregation method of any one of the previous claims,
- wherein transactional data records of a first data category (291) comprise a third ID (283) identifying a leaf on which the transaction of said transactional record was performed, whereby the transactional records of the first data category lack a fourth ID (281), the fourth ID identifying a leaf representing a transaction partner of said transaction; and/or
- wherein transactional data records of a second data category comprise a third ID (283), the third ID identifying a leaf on which the transaction of said transactional record was performed, and comprise a fourth ID (281), the fourth ID identifying a leaf representing a transaction partner of said transaction; and/or
- wherein executing the data aggregation for a particular one of the nodes comprises filtering out transactions having been performed between two of the direct or indirect child leafs of said particular node by:
∘ Performing the joining of the transactional data cube with the factor table for generating an intermediate result, the intermediate result merely comprising transactional data records of the second data category whose third-ID (283) identifies a leaf that is a direct or indirect child leaf of said particular node; and
∘ Joining the intermediate result table with the factor table a second time for identifying the transactional data records of the second data category of said intermediate result whose fourth ID (285) is indicative of a direct or indirect child leaf of said particular node; and
∘ subtracting said identified transactional data from the transaction data having been aggregated from all direct and indirect children of said particular node when executing the data aggregation for said particular node.

8. The data aggregation method of claim 7, wherein the first and the second joining of the factor table is performed on the same instance of the factor table by means of a CROSS-JOIN database operation.

9. The data aggregation method of any one of the previous claims, wherein the method further comprises:
- in response to receiving the request, generating (410) an SQL script in form of an SQL view, the JOIN operation between the transactional data cube and the factor table being implemented as part of the SQL script;
- transforming the request or parts thereof into an SQL query;
- executing the SQL query on the SQL view, thereby triggering the execution of the SQL view and the generation of the aggregated report.

10. The data aggregation method of any one of claims 7-9, further comprising:
- after the returning of the aggregated report, erasing the aggregated data generated as a result of the data aggregation from the memory and caching the generated SQL view in memory;
- receiving a further request;
- in case the signature of the further request is identical to the signature of the request, reusing the cached SQL view for processing the further request instead of generating a new SQL view for said further request.

11. The data aggregation method of any one of the previous claims, further comprising:
- after the returning of the aggregated report, erasing the aggregated data generated as a result of the aggregation from the memory and caching the generated factor table in memory;
- receiving a further request;
- in case the of the further request is identical to the signature of the request, reusing the cached factor table for processing the further request instead of generating a new factor table for said further request.

12. The data aggregation method of any one of the previous claims, further comprising:
- upon storing any one of the data records (292) to the in-memory database, automatically assigning a timestamp information(287) and an ID (283) of the one of the leafs on which said transaction was performed to said data record.

13. The data aggregation method of any one of the previous claims, wherein one or more first ones of the validity periods assigned to the edges of the hierarchical graph partially overlap, wherein one or more second ones of the validity periods assigned to the edges of the hierarchical graph do not overlap and wherein one or more third ones of the validity periods assigned to the edges of the hierarchical graph are completely contained within fourth ones of the validity periods of one or more of the edges.

14. A non-transitory, computer-readable medium storing computer-readable instructions executable by a computer, wherein execution of said instructions by the computer causes the computer to perform a method according to any one of the previous claims.

15. A database server being operatively coupled to a client device via a telecommunication network, the database server hosting an in-memory database management system (157) comprising an in-memory database (156) with a transactional data cube (208), the transactional data cube comprising a plurality of data records (292), the in-memory database management system being configured for:
- generating (402) a hierarchical graph (258) comprising a plurality of interconnected nodes (N1-N14) and leafs (L1-L5), all leafs of the generated hierarchical graph belonging to a first hierarchical level (270), all nodes of the generated hierarchical graph belonging to two or more other hierarchical levels (260-268), each node and each leaf representing a physical entity or a combination of physical entities, the physical entities being interconnected, the hierarchical graph having the topology of the interconnected physical entities, wherein at least one of the leafs is a direct child of two or more of the nodes, wherein each of the data records of the transactional data cube comprises an ID of one of the leafs;
- receiving (404) a request (256) via the telecommunication network from the client device (140), the request comprising one or more select criteria (255) and a node-ID (254) of one of the nodes;
- in response to receiving the request, selecting (406) a sub-graph (272) from the graph, the root node (N7) of the sub-graph being identified by the node ID (254) of the request;
- automatically, in response to the query, generating (408) a factor table (166) as a derivative of the selected sub-graph, the factor table being an in-memory database table to be used for in-memory DB-JOIN operations for hierarchical aggregation tasks, the factor table comprising one or more lines for each of the leafs of the sub-graph, wherein each of the lines of the factor table comprises at least:
∘ a first ID (282), the first ID being an ID of one of the leafs of the sub-graph or of a first one of the nodes of the sub-graph; and
∘ a second ID (284), the second ID being an ID of a second one of the nodes of the sub-graph, wherein the node or leaf identified by the first ID is a direct or indirect child of said second node within the sub-graph; and
∘ a factor (288), the factor indicating to which degree said leaf or first node identified by the first ID is a direct or indirect child of said second node;
- generating an aggregated report by:
∘ executing (412) a database-JOIN operation, the JOIN operation joining the factor table and the transactional data cube at least via the first ID, the JOIN operation comprising aggregating the transactional data assigned to leafs and nodes of the sub-graph which match the select criteria, wherein only a factor-dependent fraction of the transactional data is aggregated in accordance with the topology of the sub-graph, wherein transactional data relates to data that specifies an amount of resources having been added to or having been removed from a physical object at a given moment in time; and
- returning (414) the aggregated report comprising the aggregated data to the client device via the telecommunication network.

## Patentansprüche

1. Datenaggregationsverfahren, implementiert durch ein speicherinternes Datenbankmanagementsystem (157), das eine speicherinterne Datenbank (156) mit einem transaktionalen Datenwürfel (208) aufweist, wobei der transaktionale Datenwürfel eine Vielzahl von Datensätzen (292) aufweist, wobei das Verfahren Folgendes aufweist:
- Erzeugen (402) eines hierarchischen Graphen (258), der eine Vielzahl von miteinander verbundenen Knoten (N1 - N14) und Blättern (L1 - L5) aufweist, wobei alle Blätter des erzeugten hierarchischen Graphen zu einer ersten hierarchischen Ebene (270) gehören, alle Knoten des erzeugten hierarchischen Graphen zu zwei oder mehr anderen hierarchischen Ebenen (260 - 268) gehören, jeder Knoten und jedes Blatt eine physikalische Entität oder eine Kombination physikalischer Entitäten repräsentiert, die physikalischen Entitäten miteinander verbunden sind, der hierarchische Graph die Topologie der miteinander verbundenen physikalischen Entitäten hat, wobei wenigstens eines der Blätter ein direktes Kind von zwei oder mehr der Knoten ist, wobei jeder der Datensätze des transaktionalen Datenwürfels eine Kennung von einem der Blätter aufweist;
- Empfangen (404) einer Anforderung (256) über ein Telekommunikationsnetzwerk von einer Client-Vorrichtung (140), wobei die Anforderung ein oder mehr Auswahlkriterien (255) und eine Knotenkennung (254) von einem der Knoten aufweist;
- als Reaktion auf das Empfangen der Anforderung Auswählen (406) eines Subgraphen (272) aus dem Graphen, wobei der Wurzelknoten (N7) des Subgraphen durch die Knotenkennung (254) der Anforderung identifiziert wird;
- als Reaktion auf die Abfrage automatisches Erzeugen (408) einer Faktorentabelle (166) als eine Ableitung des ausgewählten Subgraphen, die Faktorentabelle dabei eine Tabelle der speicherinternen Datenbank ist, die für speicherinterne DB-JOIN-Operationen für hierarchische Aggregationsaufgaben zu verwenden ist, die Faktorentabelle dabei für jedes der Blätter des Subgraphen eine oder mehr Reihen aufweist, wobei jede der Reihen der Faktorentabelle wenigstens Folgendes aufweist:
∘ eine erste Kennung (282), wobei die erste Kennung eine Kennung von einem der Blätter des Subgraphen oder von einem ersten der Knoten des Subgraphen ist; und
∘ eine zweite Kennung (284), wobei die zweite Kennung eine Kennung eines zweiten der Knoten des Subgraphen ist, wobei der Knoten oder das Blatt, der bzw. das durch die erste Kennung identifiziert wird, ein direktes oder indirektes Kind des genannten zweiten Knoten innerhalb des Subgraphen ist;
und
∘ einen Faktor (288), wobei der Faktor angibt, in welchem Grad das bzw. der durch die erste Kennung identifizierte genannte Blatt oder erste Knoten ein direktes oder indirektes Kind des genannten zweiten Knoten ist;
- Erzeugen eines aggregierten Berichts durch:
∘ Abarbeiten (412) einer Datenbank-JOIN-Operation, wobei die JOIN-Operation die Faktorentabelle und den transaktionalen Datenwürfel wenigstens über die erste Kennung zusammenfügt, wobei die JOIN-Operation das Aggregieren der transaktionalen Daten aufweist, die Blättern und Knoten des Subgraphen zugewiesen sind, die mit den ausgewählten Kriterien übereinstimmen, wobei nur eine faktorabhängige Fraktion der transaktionalen Daten gemäß der Topologie des Subgraphen aggregiert wird, wobei transaktionale Daten sich auf Daten beziehen, die einen Betrag von Ressourcen vorgeben, die zu einem gegebenen Zeitpunkt zu bzw. von einem physikalischen Objekt hinzugefügt wurden oder entfernt wurden; und
- Zurücksenden (414) des aggregierten Berichts, der die aggregierten Daten aufweist, über das Telekommunikationsnetzwerk an die Client-Vorrichtung.

2. Datenaggregationsverfahren nach Anspruch 1,
- wobei jeder Datensatz (292) eine Zeitstempel- (287) -information aufweist, wobei die Zeitstempelinformation einen Augenblick der Durchführung einer Transaktion an einem der Blätter oder Knoten angibt;
- wobei das Erzeugen des hierarchischen Graphen das Zuweisen einer Gültigkeitsdauer (vtp1 - vtp21) zu jeder Kante aufweist, die zwei Knoten des hierarchischen Graphen verbindet oder einen Knoten und ein Blatt des hierarchischen Graphen verbindet;
- wobei die Faktorentabelle so erzeugt wird, dass jede Reihe der erzeugten Faktorentabelle ferner eine der Gültigkeitsperioden zum Angeben einer Zeit aufweist (286), während der das Blatt oder der Knoten, das bzw. der von der ersten Kennung identifiziert wird, ein direktes oder indirektes Kind des durch die in der genannten Reihe enthaltene zweite Kennung identifizierten Knoten war.

3. Datenaggregationsverfahren nach Anspruch 2,
- wobei die Datenbank-JOIN-Operation so ausgeführt wird, dass ein transaktionaler Datensatz, dem eine dritte Kennung (283) von einem der Blätter des Subgraphen zugewiesen ist, nur zum Aggregieren seiner transaktionalen Daten für einen besonderen der Knoten des Subgraphen verwendet wird, falls:
∘ die von der Zeitstempelinformation (287) des genannten Datensatzes angegebene Zeit innerhalb der Gültigkeitsdauer (286) liegt, die in einer der Reihen der erzeugten Faktorentabelle vorgegeben ist, und
∘ wobei die genannte Faktorentabellenreihe eine erste Kennung (282) aufweist, die mit der dritten Kennung (283) des genannten anderen der Blätter identisch ist.

4. Datenaggregationsverfahren nach Anspruch 2,
- wobei wenigstens einigen der transaktionalen Datensätze eine dritte Kennung (283) jeweilig zugeordnet ist, die auf eines der Blätter des Subgraphen hindeutet, und außerdem eine vierte Kennung (285) zugeordnet ist, die auf ein weiteres der Blätter des Subgraphen hindeutet, wobei die von der dritten und der vierten Kennung identifizierten Blätter als Transaktionspartner des genannten Transaktionsdatensatzes wirken,
- wobei die Datenbank-JOIN-Operation so abgearbeitet wird, dass jedweder der genannten transaktionalen Datensätze nur zum Aggregieren seiner transaktionalen Daten für einen besonderen der Knoten des Subgraphen verwendet wird, falls:
∘ die von einer Zeitstempelinformation (287) des genannten Datensatzes angegebene Zeit innerhalb der Gültigkeitsdauer (286) liegt, die in einigen der Reihen der erzeugten Faktorentabelle vorgegeben ist, und
∘ eine erste der genannten Faktorentabellenreihen eine erste Kennung (282) aufweist, die mit der dritten Kennung (283) des genannten anderen der Blätter identisch ist,
∘ eine zweite der genannten Faktorentabellenreihen eine erste Kennung (282) aufweist, die mit der vierten Kennung (285) des genannten anderen der Blätter identisch ist; und
∘ eine Kennung des genannten besonderen Knoten als Elternknotenkennung (281, 281') in der ersten und der zweiten Faktorentabellenreihe enthalten ist, wobei die Elternknotenkennung angibt, dass der genannte besondere Knoten Elter der zwei Blätter ist, die von der genannten dritten und vierten Kennung identifiziert werden.

5. Datenaggregationsverfahren nach einem der vorhergehenden Ansprüche 2 bis 4,
- wobei die Anforderung (256) eine Vorgabe einer Berichterstellungszeitdauer (252) aufweist und
- wobei die Erzeugung des hierarchischen Graphen das selektive Einbeziehen von Knoten und Blättern in den hierarchischen Graphen aufweist, die durch eine Kante verbunden sind, die eine innerhalb der Berichterstellungszeitdauer liegende Gültigkeitsdauer hat.

6. Datenaggregationsverfahren nach einem der vorhergehenden Ansprüche, wobei das Erzeugen der Faktorentabelle (166) Folgendes aufweist:
- Repräsentieren jeder Eltern-Kind-Beziehung von einem der Blätter des Subgraphen und einem seiner direkten Elternknoten des Subgraphen durch eine jeweilige Reihe der Faktorentabelle; und
- Repräsentieren jeder Eltern-Kind-Beziehung von einem der Blätter des Subgraphen und einem seiner indirekten Elternknoten des Subgraphen durch eine jeweilige Reihe der Faktorentabelle.

7. Datenaggregationsverfahren nach einem der vorhergehenden Ansprüche,
- wobei transaktionale Datensätze einer ersten Datenkategorie (291) eine dritte Kennung (283) aufweisen, die ein Blatt identifiziert, an dem die Transaktion des genannten transaktionalen Datensatzes durchgeführt wurde, bei der den transaktionalen Datensätzen der ersten Datenkategorie eine vierte Kennung (281) fehlt, wobei die vierte Kennung ein Blatt identifiziert, das einen Transaktionspartner der genannten Transaktion repräsentiert; und/oder
- wobei transaktionale Datensätze einer zweiten Datenkategorie eine dritte Kennung (283) aufweisen, wobei die dritte Kennung ein Blatt identifiziert, an dem die Transaktion des genannten transaktionalen Datensatzes durchgeführt wurde, und eine vierte Kennung (281) aufweisen, wobei die vierte Kennung ein Blatt identifiziert, das einen Transaktionspartner der genannten Transaktion repräsentiert;
und/oder
- wobei das Abarbeiten der Datenaggregation für einen besonderen der Knoten das Herausfiltern von Transaktionen aufweist, die durch Folgendes zwischen zwei der direkten oder indirekten Kindbätter des genannten besonderen Knoten durchgeführt wurden:
∘ Durchführen des Zusammenfügens des transaktionalen Datenwürfels mit der Faktorentabelle zum Erzeugen eines Zwischenergebnisses, wobei das Zwischenergebnis lediglich transaktionale Datensätze der zweiten Datenkategorie aufweist, deren dritte Kennung (283) ein Blatt identifiziert, das ein direktes oder indirektes Kindblatt des genannten besonderen Knoten ist; und
∘ ein zweites Mal Zusammenfügen der Zwischenergebnistabelle mit der Faktorentabelle zum Identifizieren der transaktionalen Datensätze der zweiten Datenkategorie des genannten Zwischenergebnisses, dessen vierte Kennung (285) auf ein direktes oder indirektes Kindblatt des genannten besonderen Knoten hindeutet; und
∘ Abziehen der genannten identifizierten transaktionalen Daten von den Transaktionsdaten, die aus allen direkten und indirekten Kindern des genannten besonderen Knoten aggregiert wurden, beim Abarbeiten der Datenaggregation für den genannten besonderen Knoten.

8. Datenaggregationsverfahren nach Anspruch 7, wobei das erste und das zweite Zusammenfügen der Faktorentabelle mithilfe einer CROSS-JOIN-Datenbankoperation an derselben Instanz der Faktorentabelle durchgeführt wird.

9. Datenaggregationsverfahren nach einem der vorhergehenden Ansprüche, wobei das Verfahren ferner Folgendes aufweist:
- als Reaktion auf den Empfang der Anforderung Erzeugen (410) eines SQL-Skripts in Form einer SOL-Ansicht, wobei die JOIN-Operation zwischen dem transaktionalen Datenwürfel und der Faktorentabelle als Teil des SQL-Skripts implementiert wird;
- Umwandeln der Anforderung oder von Teilen davon in eine SOL-Abfrage;
- Abarbeiten der SOL-Abfrage an der SOL-Ansicht, dadurch Auslösen des Abarbeitens der SOL-Ansicht und der Erzeugung des aggregierten Berichts.

10. Datenaggregationsverfahren nach einem der Ansprüche 7 bis 9, das ferner Folgendes aufweist:
- nach dem Zurücksenden des aggregierten Berichts Löschen der als Ergebnis der Datenaggregation erzeugten aggregierten Daten aus dem Speicher und Zwischenspeichern der erzeugten SOL-Ansicht im Speicher;
- Empfangen einer weiteren Anforderung;
- falls die Signatur der weiteren Anforderung mit der Signatur der Anforderung identisch ist, Wiederverwenden der zwischengespeicherten SOL-Ansicht zum Verarbeiten der weiteren Anforderung anstelle Erzeugen einer neuen SOL-Ansicht für die genannte weitere Anforderung.

11. Datenaggregationsverfahren nach einem der vorhergehenden Ansprüche, das ferner Folgendes aufweist:
- nach dem Zurücksenden des aggregierten Berichts Löschen der als Ergebnis der Aggregation erzeugten aggregierten Daten aus dem Speicher und Zwischenspeichern der erzeugten Faktorentabelle im Speicher;
- Empfangen einer weiteren Anforderung;
- falls die der weiteren Anforderung mit der Signatur der Anforderung identisch ist, Wiederverwenden der zwischengespeicherten Faktorentabelle zum Verarbeiten der weiteren Anforderung anstelle von Erzeugen einer neuen Faktorentabelle für die genannte weitere Anforderung.

12. Datenaggregationsverfahren nach einem der vorhergehenden Ansprüche, das ferner Folgendes aufweist
- nach Speichern von einem der Datensätze (292) in die speicherinterne Datenbank automatisches Zuweisen einer Zeitstempelinformation (287) und einer ID (283) des einen der Blätter, an dem die genannte Transaktion durchgeführt wurde, zu dem genannten Datensatz.

13. Datenaggregationsverfahren nach einem der vorhergehenden Ansprüche, wobei eine oder mehr erste der Gültigkeitsdauern, die den Kanten des hierarchischen Graphen zugewiesen sind, teilweise überlappen, wobei eine oder mehr zweite der Gültigkeitsdauern, die den Kanten des hierarchischen Graphen zugewiesen sind, nicht überlappen und wobei eine oder mehr dritte der Gültigkeitsdauern, die den Kanten des hierarchischen Graphen zugewiesen sind, völlig innerhalb vierter der Gültigkeitsdauern von einer oder mehr Kanten enthalten sind.

14. Nichtflüchtiges computerlesbares Medium, das computerlesbare Anweisungen speichert, die von einem Computer abgearbeitet werden können, wobei das Abarbeiten der genannten Anweisungen durch den Computer den Computer zum Durchführen eines Verfahrens nach einem der vorhergehenden Ansprüche veranlasst.

15. Datenbankserver, der über ein Telekommunikationsnetzwerk funktionell mit einer Client-Vorrichtung gekoppelt ist, wobei der Datenbankserver Host für ein speicherinternes Datenbankmanagementsystem (157) ist, das eine speicherinterne Datenbank (156) mit einem transaktionalen Datenwürfel (208) aufweist, wobei der transaktionale Datenwürfel eine Vielzahl von Datensätzen (292) aufweist, wobei das speicherinterne Datenbankmanagementsystem konfiguriert ist zum:
- Erzeugen (402) eines hierarchischen Graphen (258), der eine Vielzahl von miteinander verbundenen Knoten (N1 - N14) und Blättern (L1 - L5) aufweist, wobei alle Blätter des erzeugten hierarchischen Graphen zu einer ersten hierarchischen Ebene (270) gehören, alle Knoten des erzeugten hierarchischen Graphen zu zwei oder mehr anderen hierarchischen Ebenen (260 - 268) gehören, jeder Knoten und jedes Blatt eine physikalische Entität oder eine Kombination physikalischer Entitäten repräsentiert, die physikalischen Entitäten miteinander verbunden sind, der hierarchische Graph die Topologie der miteinander verbundenen physikalischen Entitäten hat, wobei wenigstens eines der Blätter ein direktes Kind von zwei oder mehr der Knoten ist, wobei jeder der Datensätze des transaktionalen Datenwürfels eine Kennung von einem der Blätter aufweist;
- Empfangen (404) einer Anforderung (256) über das Telekommunikationsnetzwerk von der Client-Vorrichtung (140), wobei die Anforderung ein oder mehr Auswahlkriterien (255) und eine Knotenkennung (254) von einem der Knoten aufweist;
- als Reaktion auf das Empfangen der Anforderung Auswählen (406) eines Subgraphen (272) aus dem Graphen, wobei der Wurzelknoten (N7) des Subgraphen durch die Knotenkennung (254) der Anforderung identifiziert wird;
- als Reaktion auf die Abfrage automatisches Erzeugen (408) einer Faktorentabelle (166) als eine Ableitung des ausgewählten Subgraphen, die Faktorentabelle dabei eine Tabelle der speicherinternen Datenbank ist, die für speicherinterne DB-JOIN-Operationen für hierarchische Aggregationsaufgaben zu verwenden ist, die Faktorentabelle dabei für jedes der Blätter des Subgraphen eine oder mehr Reihen aufweist, wobei jede der Reihen der Faktorentabelle wenigstens Folgendes aufweist:
∘ eine erste Kennung (282), wobei die erste Kennung eine Kennung von einem der Blätter des Subgraphen oder von einem ersten der Knoten des Subgraphen ist; und
∘ eine zweite Kennung (284), wobei die zweite Kennung eine Kennung eines zweiten der Knoten des Subgraphen ist, wobei der Knoten oder das Blatt, der bzw. das durch die erste Kennung identifiziert wird, ein direktes oder indirektes Kind des genannten zweiten Knoten innerhalb des Subgraphen ist;
und
∘ einen Faktor (288), wobei der Faktor angibt, in welchem Grad das bzw. der durch die erste Kennung identifizierte genannte Blatt oder erste Knoten ein direktes oder indirektes Kind des genannten zweiten Knoten ist;
- Erzeugen eines aggregierten Berichts durch:
∘ Abarbeiten (412) einer Datenbank-JOIN-Operation, wobei die JOIN-Operation die Faktorentabelle und den transaktionalen Datenwürfel wenigstens über die erste Kennung zusammenfügt, wobei die JOIN-Operation das Aggregieren der transaktionalen Daten aufweist, die Blättern und Knoten des Subgraphen zugewiesen sind, die mit den ausgewählten Kriterien übereinstimmen, wobei nur eine faktorabhängige Fraktion der transaktionalen Daten gemäß der Topologie des Subgraphen aggregiert wird, wobei transaktionale Daten sich auf Daten beziehen, die einen Betrag von Ressourcen vorgeben, die zu einem gegebenen Zeitpunkt zu bzw. von einem physikalischen Objekt hinzugefügt wurden oder entfernt wurden; und
- Zurücksenden (414) des aggregierten Berichts, der die aggregierten Daten aufweist, über das Telekommunikationsnetzwerk an die Client-Vorrichtung.

## Revendications

1. Procédé d'agrégation de données mis en oeuvre par un système de gestion de base de données en mémoire (157) comprenant une base de données en mémoire (156) avec un cube de données transactionnelles (208), le cube de données transactionnelles comprenant une pluralité d'enregistrements de données (292), le procédé comprenant :
- la génération (402) d'un graphique hiérarchique (258) comprenant une pluralité de noeuds interconnectés (N1 à N14) et de feuilles (L1 à L5), toutes les feuilles du graphique hiérarchique généré appartenant à un premier niveau hiérarchique (270), tous les noeuds du graphique hiérarchique généré appartenant à deux ou à plus de deux autres niveaux hiérarchiques (260 à 268), chaque noeud et chaque feuille représentant une entité physique ou une association d'entités physiques, les entités physiques étant interconnectées, le graphique hiérarchique ayant la topologie des entités physiques interconnectées, où l'au moins une des feuilles est un enfant direct des deux ou des plus de deux noeuds, où chacun des enregistrements de données du cube de données transactionnelles comprend une ID d'une des feuilles ;
- la réception (404) d'une requête (256) via un réseau de télécommunication en provenance d'un dispositif client (140), la requête comprenant un ou plusieurs critères de choix (255) et une identité ID de noeud (254) de l'un des noeuds ;
- en réponse à la réception de la requête, le choix (406) d'un sous-graphique (272) à partir du graphique, le noeud racine (N7) du sous-graphique étant identifié par l'ID de noeud (254) de la requête ;
- automatiquement, en réponse à la requête, la génération (408) d'une table de facteurs (166) en tant que dérivée du sous-graphique choisi, la table de facteurs étant une table de la base de données en mémoire destinée à être utilisée dans des opérations de jointure de la base de données DB-JOIN pour des tâches d'agrégation hiérarchique, la table des facteurs comprenant une ou plusieurs lignes pour chacune des feuilles du sous-graphique, où chacune des lignes de la table des facteurs comprend au moins :
∘ une première ID (282), la première ID étant une ID de l'une des feuilles du sous-graphique ou d'un premier parmi les noeuds du sous-graphique ; et
∘ une seconde ID (284), la seconde ID étant une ID d'un second parmi les noeuds du sous-graphique, où le noeud ou la feuille identifié(e) par la première ID est un enfant direct ou indirect dudit second noeud au sein du sous-graphique ;
et
∘ un facteur (28), le facteur indiquant à quel degré ladite feuille ou premier noeud identifié(e) par la première ID est un enfant direct ou indirect dudit second noeud ;
- la génération d'un rapport agrégé par :
∘ l'exécution (412) d'une opération de jointure JOIN à la base de données, l'opération JOIN raccordant la table des facteurs et le cube des données transactionnelles au moins via la première ID, l'opération JOIN comprenant l'agrégation des données transactionnelles attribuées aux feuilles et aux noeuds du sous-graphique qui correspondent aux critères de choix, où seulement une fraction dépendante des facteurs des données transactionnelles est agrégée conformément à la topologie du sous-graphique, où les données transactionnelles se rapportent aux données qui précisent une quantité de ressources qui a été ajoutée ou qui a été retirée d'un objet physique à un instant donné dans le temps ; et
- le renvoi (414) du rapport agrégé comprenant les données agrégées au dispositif client via le réseau de télécommunication.

2. Procédé d'agrégation des données selon la revendication 1,
- dans lequel chaque enregistrement de données (292) comprend une information d'horodatage (287), l'information d'horodatage indiquant le moment de réalisation d'une transaction sur l'une des feuilles ou l'un des noeuds ;
- où la génération du graphique hiérarchique comprend l'attribution d'une période de validité (vtp1 à vtp21) à chaque bord connectant deux noeuds ou connectant un noeud et une feuille du graphique hiérarchique ;
- moyennant quoi, la table des facteurs est générée de sorte que chaque ligne de la table des facteurs générée comprend en outre (286) l'une des périodes de validité pour indiquer un instant durant lequel la feuille ou le noeud qui a été identifié(e) par la première ID a été un enfant direct ou indirect du noeud identifié par la seconde ID contenue dans ladite ligne.

3. Procédé d'agrégation des données selon la revendication 2,
- dans lequel l'opération de jointure à la base de données JOIN est exécutée de telle manière qu'un enregistrement des données transactionnelles ayant attribué une troisième ID (283) à l'une des feuilles du sous-graphique est utilisé pour l'agrégation de ses données transactionnelles pour un noeud particulier parmi les noeuds du sous-graphique seulement dans le cas où :
∘ le temps indiqué par l'information d'horodatage (287) dudit enregistrement des données se situe à l'intérieur de la période de validité (286) précisée dans l'une des lignes de la table des facteurs générée, et
∘ où ladite ligne de la table des facteurs comprend une première ID (282) qui est identique à la troisième ID (283) de ladite autre une feuille parmi les feuilles.

4. Procédé d'agrégation des données selon la revendication 2,
- dans lequel au moins certains des enregistrements des données transactionnelles ont respectivement attribué une troisième ID (283) qui est indicatrice de l'une des feuilles du sous-graphique et ont en plus attribué une quatrième ID (285) qui est indicatrice d'une autre des feuilles du sous-graphique, les feuilles identifiées par la troisième et la quatrième ID agissant en tant que partenaires de transaction dudit enregistrement de la transaction,
- où l'opération de jointure à la base de données JOIN est exécutée de sorte que l'un quelconque desdits enregistrements des données transactionnelles est utilisé pour agréger ses données transactionnelles pour un noeud particulier parmi les noeuds du sous-graphique seulement dans le cas où :
∘ le temps indiqué par l'information d'horodatage (287) dudit enregistrement des données se situe dans la période de validité (286) précisée dans certaines des lignes de la table des facteurs générée, et
∘ une première desdites lignes de la table des facteurs comprend une première ID (282) qui est identique à la troisième ID (283) de ladite autre une feuille parmi les feuilles, et
∘ une seconde desdites lignes de la table des facteurs comprend une première ID (282') qui est identique à la quatrième ID (285) de ladite autre une feuille parmi les feuilles ; et
∘ une ID dudit noeud particulier est contenue en tant qu'ID de noeud parent (281, 281') dans la première et la seconde ligne de la table des facteurs, l'ID de noeud parent indiquant que ledit noeud particulier est parent des deux feuilles identifiées par la troisième et la quatrième ID.

5. Procédé d'agrégation des données selon l'une quelconque des revendications 2 à 4 précédentes,
- dans lequel la requête (256) comprend une précision de la période couverte par le rapport (252) ; et
- dans lequel la génération du graphique hiérarchique comprend de manière sélective notamment les noeuds et les feuilles dans le graphique hiérarchique qui sont connectés par un bord ayant une période de validité qui se situe dans la période couverte par le rapport.

6. Procédé d'agrégation des données selon l'une quelconque des revendications précédentes, dans lequel la génération de la table des facteurs (166) comprend :
- la représentation de chaque relation parent - enfant de l'une quelconque des feuilles du sous-graphique et de l'un quelconque de ses noeuds parent directs du sous-graphique par une ligne respective de la table des facteurs ; et
- la représentation de chaque relation parent - enfant de l'une quelconque des feuilles du sous-graphique et de l'un quelconque de ses noeuds parents indirects du sous-graphique par une ligne respective de la table des facteurs.

7. Procédé d'agrégation des données selon l'une quelconque des revendications précédentes,
- dans lequel les enregistrements des données transactionnelles d'une première catégorie de données (291) comprennent une troisième ID (283) identifiant une feuille sur laquelle la transaction dudit enregistrement transactionnel a été réalisé, moyennant quoi les enregistrements transactionnels de la première catégorie de données n'ont pas de quatrième ID (281), la quatrième ID identifiant une feuille représentant un partenaire de transaction de ladite transaction ; et/ou
- dans lequel les enregistrements des données transactionnelles d'une seconde catégorie de données comprennent une troisième ID (283), la troisième ID identifiant une feuille sur laquelle la transaction dudit enregistrement transactionnel a été réalisé, et comprennent une quatrième ID (281), la quatrième ID identifiant une feuille représentant un partenaire de transaction de ladite transaction ;
et/ou
- dans lequel l'exécution de l'agrégation des données pour un noeud particulier parmi les noeuds comprend le filtrage des transactions qui ont été réalisées entre deux des feuilles enfants directs ou indirects dudit noeud particulier par :
∘ la réalisation de la jonction du cube des données transactionnelles avec la table des facteurs pour générer un résultat intermédiaire, le résultat intermédiaire comprenant uniquement les enregistrements des données transactionnelles de la seconde catégorie de données dont la troisième ID (283) identifie une feuille qui est une feuille enfant directe ou indirecte dudit noeud particulier; et
∘ la jonction de la table du résultat intermédiaire avec la table des facteurs une seconde fois pour identifier les enregistrements des données transactionnelles de la seconde catégorie de données dudit résultat intermédiaire dont la quatrième ID (285) est indicatrice d'une feuille enfant directe ou indirecte dudit noeud particulier; et
∘ la soustraction desdites données transactionnelles identifiées à partir des données de la transaction qui ont été agrégées à partir de tous les enfants directs et indirects dudit noeud particulier lors de l'exécution de l'agrégation des données dudit noeud particulier.

8. Procédé d'agrégation des données selon la revendication 7, dans lequel les première et seconde jonctions de la table des facteurs sont réalisées sur le même exemple de la table des facteurs au moyen d'une opération de jointure croisée CROSS-JOIN de la base de données.

9. Procédé d'agrégation des données selon l'une quelconque des revendications précédentes, dans lequel le procédé comprend en outre :
- en réponse à la réception de la requête, la génération (410) d'un script SQL sous la forme d'une vue SQL, l'opération JOIN entre le cube des données transactionnelles et la table des facteurs étant mise en oeuvre en tant que partie du script SQL ;
- la transformation de la requête ou de parties ce celle-ci en une requête SQL ;
- l'exécution de la requête SQL sur la vue SQL, déclenchant par conséquent l'exécution de la vue SQL et la génération du rapport agrégé.

10. Procédé d'agrégation des données selon l'une quelconque des revendications 7 à 9, comprenant en outre :
- après le renvoi du rapport agrégé, la suppression des données agrégées générées en tant que résultat de l'agrégation des données en provenance de la mémoire et la mise en cache de la vue SQL générée dans la mémoire ;
- la réception d'une nouvelle requête ;
- dans le cas où la signature de la nouvelle requête est identique à la signature de la requête, la réutilisation de la vue SQL mise en cache pour traiter la nouvelle requête au lieu de générer une nouvelle vue SQL pour ladite nouvelle requête.

11. Procédé d'agrégation des données selon l'une quelconque des revendications précédentes, comprenant en outre :
- après le renvoi du rapport agrégé, la suppression des données agrégées générées en tant que résultat de l'agrégation en provenance de la mémoire et la mise en cache de la table des facteurs générée dans la mémoire ;
- la réception d'une nouvelle requête ;
- dans le cas où la nouvelle requête est identique à la signature de la requête, la réutilisation de la table des facteurs mise en cache pour traiter la nouvelle requête au lieu de générer une nouvelle table des facteurs pour ladite nouvelle requête.

12. Procédé d'agrégation des données selon l'une quelconque des revendications précédentes, comprenant en outre :
- après le stockage de l'un quelconque des enregistrements des données (292) dans la base de données en mémoire, l'attribution de manière automatique d'une information d'horodatage (287) et d'une ID (283) de la feuille parmi les feuilles sur laquelle ladite transaction a été réalisée pour ledit enregistrement des données.

13. Procédé d'agrégation des données selon l'une quelconque des revendications précédentes, dans lequel une ou plusieurs premières périodes parmi les périodes de validité attribuées aux bords du graphique hiérarchique se chevauchent partiellement, où une ou plusieurs secondes périodes parmi les périodes de validité attribuées aux bords du graphique hiérarchique ne se chevauchent pas et où une ou plusieurs troisièmes périodes parmi les périodes de validité attribuées aux bords du graphique hiérarchique sont entièrement contenues au sein de quatrièmes périodes parmi les périodes de validité d'un ou de plusieurs bords.

14. Support lisible par ordinateur, non transitoire, qui stocke des instructions lisibles par ordinateur exécutables par un ordinateur, où l'exécution desdites instructions par l'ordinateur amène l'ordinateur à réaliser un procédé selon l'une quelconque des revendications précédentes.

15. Serveur de base de données qui est couplé de manière fonctionnelle à un dispositif client via un réseau de télécommunication, le serveur de la base de données hébergeant un système de gestion de la base de données en mémoire (157) comprenant une base de données en mémoire (156) avec un cube de données transactionnelles (208), le cube de données transactionnelles comprenant une pluralité d'enregistrements de données (292), le système de gestion de la base de données en mémoire étant configurée pour :
- générer (402) un graphique hiérarchique (258) comprenant une pluralité de noeuds interconnectés (N1 à N14) et de feuilles (L1 à L5), toutes les feuilles du graphique hiérarchique généré appartenant à un premier niveau hiérarchique (270), tous les noeuds du graphique hiérarchique généré appartenant à deux ou à plus de deux autres niveaux hiérarchiques (260 à 268), chaque noeud et chaque feuille représentant une entité physique ou une combinaison d'entités physiques, les entités physiques étant interconnectées, le graphique hiérarchique ayant la topologie des entités physiques interconnectées, où au moins l'une des feuilles est un enfant direct de deux ou de plus de deux noeuds, où chacun des enregistrements des données du cube de données transactionnelles comprend une ID de l'une des feuilles ;
- la réception (404) d'une requête (256) via le réseau de télécommunication en provenance du dispositif client (140), la requête comprenant un ou plusieurs critères de choix (255) et une ID de noeud (254) de l'un des noeuds ;
- en réponse à la réception de la requête, le choix (406) d'un sous-graphique (272) à partir du graphique, le noeud racine (N7) du sous-graphique étant identifié par l'ID du noeud (254) de la requête ;
- automatiquement, en réponse à la requête, la génération (408) d'une table de facteurs (166) en tant que dérivée du sous-graphique choisi, la table des facteurs étant une table de la base de données en mémoire à utiliser pour les opérations de jointure de la base de données pour les tâches d'agrégation hiérarchique, la table des facteurs comprenant une ou plusieurs lignes pour chacune des feuilles du sous-graphique, où chacune des lignes de la table des facteurs comprend au moins :
∘ une première ID (282), la première ID étant une ID de l'une des feuilles du sous-graphique ou d'un premier noeud parmi les noeuds du sous-graphique ; et
∘ une seconde ID (284), la seconde ID étant une ID d'un second noeud parmi les noeuds du sous-graphique, où le noeud ou la feuille identifié(e) par la première ID est un enfant direct ou indirect dudit second noeud au sein du sous-graphique ; et
∘ un facteur (288), le facteur indiquant à quel degré ladite feuille ou (ledit) premier noeud identifié(e) par la première ID est un enfant direct ou indirect dudit second noeud ;
- la génération d'un rapport agrégé par :
∘ l'exécution (412) d'une opération de jointure de la base de données JOIN, l'opération JOIN joignant la table des facteurs et le cube des données transactionnelles au moins via la première ID, l'opération JOIN comprenant l'agrégation des données transactionnelles attribuées aux feuilles et aux noeuds du sous-graphique qui correspondent aux critères choisis, où seulement une fraction dépendante d'un facteur des données transactionnelles est agrégée conformément à la topologie du sous-graphique, où les données transactionnelles se rapportent aux données qui précisent une quantité de ressources ayant été ajoutées ou ayant été retirées à un objet physique à un instant donné ; et
- le renvoi (414) du rapport agrégé comprenant les données agrégées au dispositif client via le réseau de télécommunication.
